# EUROPÄISCHE PATENTSCHRIFT

(11) **EP 4 025 744 B1**
(45) Veröffentlichungstag und Bekanntmachung des Hinweises auf die Patenterteilung: **25.09.2024**
(21) Anmeldenummer: 19766004.6
(22) Anmeldetag: 06.09.2019
(51) Int. Cl.: E04B 5/04, E04B 5/48, E04C 3/26, E04C 5/07, E04B 5/43

(54) **BETONDECKE, BETONDECKENELEMENTE UND VERFAHREN ZUM HERSTELLEN EINER BETONDECKE SOWIE EINES BETONDECKENELEMENTES**
CONCRETE FLOOR, CONCRETE FLOOR ELEMENTS AND METHOD FOR PRODUCING A CONCRETE FLOOR AND A CONCRETE FLOOR ELEMENT
PLANCHER EN BÉTON, ÉLÉMENTS DE PLANCHER EN BÉTON ET PROCÉDÉS DE FABRICATION D'UN PLANCHER EN BÉTON ET D'UN ÉLÉMENT DE PLANCHER EN BÉTON

(43) Veröffentlichungstag der Anmeldung: 13.07.2022
(73) Patentinhaber: CPC AG, 8450 Andelfingen (CH)
(72) Erfinder: KURATH-GROLLMANN, Josef Peter, 8409 Winterthur (CH)
(74) Vertreter: Troesch Scheidegger Werner AG
(86) Internationale Anmeldenummer: PCT/EP2019/073887
(87) Internationale Veröffentlichungsnummer: WO 2021/043428

(56) Entgegenhaltungen:
- WO-A1-03/046100
- WO-A1-2011/155841
- WO-A1-2013/145726
- WO-A2-2008/051923
- CA-A1- 2 777 124
- CN-A- 102 535 710
- DE-U1- 202015 104 966
- US-A- 3 475 529

## Beschreibung

Die vorliegende Erfindung betrifft unter anderem eine Betondecke, Betondeckenelemente sowie Verfahren zum Herstellen einer Betondecke und zum Herstellen eines Betondeckenelements.

Im Gebäudebau weit verbreitet ist die klassische Stahlbetondecke, welche aufgrund der Stahlarmierungen neben hoher Druckkräfte auch hohe Zugkräfte aufnehmen kann und dadurch besonders stabil ist. Üblicherweise aufgebaut wird eine solche Stahlbetondecke indem zuerst Schaltafeln flächig auf den bereits stehenden Gebäudewänden angeordnet und mithilfe von Stützen abgestützt werden. Auf die durch die Schaltafeln gebildete Ebene werden dann Abstandshalter gelegt, auf welchen wiederum ein erstes Stahlgitter angeordnet wird. Meist folgt noch eine weitere Lage Abstandshalter auf dem ersten Stahlgitter, auf welcher wiederum ein weiteres Stahlgitter angeordnet wird. In die Struktur aus Stahlgittern müssen dann noch Leitungen, wie z.B. Rohre für die Fussbodenheizung oder Kabelkanäle, verlegt werden bevor alles mit Beton ausgegossen werden kann, um die spätere Stahlbetondecke zu bilden. Wie bereits erwähnt ist diese Decke besonders stabil, benötigt aber auch eine grosse Menge an Ausgangsmaterialien, insbesondere an Beton, und besitzt ein hohes Eigengewicht. Nachträgliche Anpassungen, wie z.B. das Verlegen neuer Leitungen gestalten sich schwierig und auch die initiale Herstellung einer solchen Stahlbetondecke vor Ort auf der Baustelle verläuft aufgrund einer gewissen Abhängigkeit von den gegebenen Wetterbedingungen nicht immer reibungslos. Frost, grosse Hitze oder starke Niederschläge können sich auswirken auf den Abbindevorgang des Betons und somit einen Einfluss auf die Qualität der Stahlbetondecke haben, wodurch Witterungsbedingungen bei deren Herstellung unbedingt mitzuberücksichtigen sind.

Das US 3475529 A offenbart ein Verfahren für das Formen einer vorgespannten Betonstruktur mit sich durch die Betonstruktur erstreckenden Hohlräumen.

Die Aufgabe der vorliegenden Erfindung besteht darin, eine Betondecke bereitzustellen, welche mindestens einen Nachteil aus dem Stand der Technik bekannter Stahlbetondecken überwindet. Aspekte der Erfindung betreffen Betondeckenelemente zum Herstellen einer Betondecke, Verfahren zum Herstellen einer Betondecke sowie Betondecken an und für sich. Weitere Aspekte der Erfindung betreffen die Verwendung von FRC-Betonelementen und die Verwendung spezieller Verbindungstechniken für FRC-Elemente.

Die Aufgabe wird gelöst durch ein Betondeckenelement nach Anspruch 1.

Besagtes Betondeckenelement umfasst eine flächige Grundstruktur, welche mindestens eine FRC-Platte umfasst und eine Oberseite aufweist. Weiter umfasst das Betondeckenelement mindestens einen FRC-Steg. Der FRC-Steg ist auf der Oberseite angeordnet und abschnittsweise mit der Grundstruktur verbunden.

Die Buchstaben "FRC" in FRC-Platten sowie FRC-Stegen stehen für "Fiber Reinforced Concrete". FRC-Platten sind u.a. beschrieben in der WO2014/040653 A1. FRC-Platten sind mit Fasern bspw. aus Carbon, Glas, Kevlar, Basalt, Stahl, Naturfaser oder dergleichen vorgespannt, deren Querschnittsfläche bspw. kleiner 5 mm² ist, und haben eine Dicke von ein paar Zentimetern (z.B. 1 cm bis 10 cm). Die Breite sowie Länge wiederum liegen in Bereichen von wenigen Metern (1 m, 2 m, ..., 5 m etc.) bis hin zu 10 m oder gar 20 m bis hin zu 40 m. Die Armierung der Platten kann basierend auf unterschiedlichen Abständen und Anordnungen der Fasern zueinander erfolgen. Weitere Details sind der WO2014/040653 A1 zu entnehmen. Da die eingesetzten Fasern eine sehr hohe Zugfestigkeit aufweisen und bevorzugt nicht korrodieren, können damit besonders tragfähige, dünne Betonplatten hergestellt werden. Die bei herkömmlichen Stahlbetonplatten erforderliche Armierungsüberdeckung von drei bis vier Zentimetern ist nicht mehr erforderlich. Im Vergleich fallen FRC-Platten folglich deutlich dünner aus, haben ein geringeres Gewicht - und dies bei gleicher Tragfähigkeit. Eine spezielle Ausführungsform einer FRC-Platte ist die CPC-Platte. Die Buchstaben "CPC" stehen für "carbon prestressed concrete" und beschreiben die mit dünnen vorgespannten Carbonlitzen bewehrten Betonplatten, welche gemäss Erfindung zum Einsatz kommen können und besonders filigran und dennoch belastbar sind. Besonders an den CPC-Platten ist, dass sie Dank der Vorspannung mittels der Fasern auch unter reiner Zugbelastung enorm steif und unter Gebrauchslast rissfrei bleiben. Dies ist gerade beim Einsatz als Grundstruktur ein Vorteil. Auch als Scheibe eingesetzt können sie bei hoher Steifigkeit rissfrei im Gebrauchszustand enorm hohe Schubkräfte aufnehmen.

Typische für Betondeckenelemente verwendete FRC-Platten sind zwischen 10 und 100 mm, insbesondere zwischen 20 und 60 mm, z.B. 25 mm oder 30 mm, insbesondere 40 mm im Hinblick auf Brandschutz, dick und weisen bspw. eine 4-lagige CFK-Armierung auf. Was die Ausdehnung anbelangt, so können die FRC-Platten Längen sowie Breiten von mehreren Metern aufweisen. Beispielsweise 1 m × 2 m, 2 m × 2 m, 2 m x 4 m bis hin zu 20 m x 40 m. Bevorzugt ist eine Breite von maximal 2.4 m, da hierbei noch ein problemfreier Strassentransport möglich ist. Jedoch ist auch eine Breite von bis 3.5 m oder gar bis 6 m unter Inkaufnahme erschwerter Transportbedingungen. Die Länge der FRC-Platten wird bevorzugt durch die Grundfläche der zu überspannenden Räume oder der Gebäudeabmessungen vorgegeben und liegt typischerweise im Bereich von ca. 4 m oder 5 m bis hin zu 12 m oder gar 20 m. Die Unterseite und die Oberseite einer FRC-Platte sind für gewöhnlich identisch ausgebildet, sodass lediglich das Anbringen des FRC-Stegs oder der mehreren FRC-Stege festlegt, welche Seite im weiteren Verlauf des Herstellens der Betondecke als Oberseite fungiert.

Die FRC-Stege bestehen ebenfalls aus FRC und werden bevorzugt aus FRC-Platten geschnitten. Ein Steg beschreibt in Zusammenhang mit der Erfindung eine längliche Struktur, welche wie eine Art Rippe oder Lamelle an der Grundstruktur angebracht werden kann, jedoch nicht entlang ihrer gesamten Länge mit der Grundstruktur in Verbindung stehen muss. Ein FRC-Steg weist bevorzugt eine Dicke von 2 cm bis 10 cm, insbesondere von 4 cm bis 8 cm, wie z.B. von 6 cm, auf, welche Dicke sich konstant oder variierend über die gesamte Länge und Breite des FRC-Stegs erstreckt. Die Länge der Stege wird bspw. angepasst an die Länge respektive Breite der FRC-Platte und liegt somit typischerweise im Bereich von mehreren Metern, z.B. zwischen 1 m bis 20 m oder gar bis 40 m. Die Höhe eines FRC-Stegs bzw. der Stützen des FRC-Stegs variiert, unter anderem auch in Abhängigkeit von der Längenausdehnung des zu überspannenden Raums unter dem Betondeckenelement, und liegt meist im Bereich von einem Zentel bis einem Dreissigstel des mit der Decke zu überspannenden Raums. Insbesondere ist es der Abstand zwischen zwei benachbarten Auflagerpunkten, welcher durch 10 bis durch 30 geteilt die Höhe der FRC-Stege ergibt. Die Höhe der Stege kann aber auch konstruktiv bedingt höher sein, wenn z.B. Leitungen in der Höhe des Deckenelementes durchgeführt werden müssen oder anschliessende Räume wesentlich grössere Auflagerabstände haben und die Deckenelementstärke über die gesamte Decke konstant gehalten werden soll. Für eine 2.4 m breite und 6 m lange FRC-Platte, deren Auflagerpunkte sich in den Ecken befinden, resultiert rechnerisch eine FRC-Steg-Höhe von 8 cm bis 24 cm bzw. von 20 cm bis 60 cm. Da der maximale Abstand zweier Auflagerpunkte massgebend für die Dimensionierung der FRC-Stege ist, werden diese mit einer Höhe von 20 cm bis 60 cm gefertigt. Bei einem kreuzweisen Einsatz der FRC-Stege bietet es sich ggfs. an, sich auf eine gleiche Höhe festzulegen für die Quer- und längslaufenden CPC-Stege.

Wie der Name "Betondeckenelement" sagt, kann ein derartiges Betondeckenelement zum Herstellen einer Betondecke verwendet werden. Diese Bezeichnung ist jedoch keinesfalls einschränkend zu verstehen. Bspw. ist es auch möglich, ein solches Betondeckenelement zum Herstellen einer Brücke, insbesondere einer Trogbrücke, zu verwenden.

Der FRC-Steg weist mindestens zwei Stützen auf, welche die abschnittsweise Verbindung mit der Grundstruktur bereitstellen.

Was die Verbindung des FRC-Stegs über die Stützen mit der Grundstruktur anbelangt, so ist diese Verbindung bevorzugt kraftschlüssig und erfolgt bspw. über einen oder mehrere Fortsätze je Stütze. Diese Fortsätze grenzen bevorzugt nicht nur an die Oberseite der Grundstruktur an, sondern greifen in die Grundstruktur ein.

In einer erfindungsgemässen Ausführungsform des Betondeckenelements, welche mit jeder der noch zu nennenden und bereits genannten Ausführungsformen kombiniert werden kann, sofern nicht im Widerspruch dazu, befindet sich zwischen den mindestens zwei Stützen eine Aussparung.

Ein solcher Steg setzt sich zusammen aus Bereichen, den Stützen, welche vorgesehen sind, um mindestens teilweise in Kontakt, insbesondere unter Kraftschluss und mithilfe von Fortsätzen, mit der Grundstruktur zu treten, und Bereichen, den Aussparungen, welche vorgesehen sind, um eben nicht in Kontakt, und vor allem nicht kraftschlüssig in Kontakt, mit der Grundstruktur zu treten. Diese Aussparungen stellen insbesondere einen Freiraum bzw. einen Durchgang bereit. Stege mit bogenförmigen Aussparungen, insbesondere mit halbkreisförmigen Aussparungen sind zwar besonders stabil und auch unkompliziert in der Herstellung, jedoch sind grundsätzlich auch andere Aussparungsformen realisierbar, wie z.B. ovale, dreieckige, rechteckige oder sonstige vieleckige Formen. Die Höhe der Aussparung kann im Vergleich zur bereits diskutierten Höhe des FRC-Stegs bzw. der Stützen des FRC-Stegs zwischen ca. 1 % bis ca. 80 % ausmachen. Bei einer FRC-Steg-Höhe von z.B. 20 cm kann die Höhe der Aussparung nur 2 mm oder aber bis 16 cm betragen. Es ist jedoch bevorzugt, dass die Aussparung nur so gross ist, dass eine Mindestmaterialstärke von 4 cm bis 20 cm, je nach Belastung und Spannweite der vorgesehenen Decke) zwischen den Stützen vorhanden bleibt. Die Öffnungslänge der Aussparung beträgt im Auflagerbereich der Betondeckenelemente ca. 0.5 bis zweimal der Höhe der Stege und insbesondere mindestens 10 cm oder gar mindestens 20 cm oder mindestens 30 cm. Im mittleren Bereich der Spannweite kann die Öffnungslänge der Aussparung auch ein Mehrfaches der Höhe der Stege betragen. Grundsätzlich können Aussparungen eines FRC-Steges unterschiedliche Grössen (gilt sowohl für Öffnungslänge als auch Öffnungshöhe) aufweisen und insbesondere in der Mitte des FRC-Stegs grösser sein als im Bereich der Enden. Je nach geplanter Anwendung können Stege mit nur einer Aussparung und zwei Stützen eingesetzt werden, oder aber Stege mit einer Vielzahl an n Aussparungen (z.B. 2, 3, 4, 5, 6, 7, 8, 9, 10, 11, 12, 13, 14, 15, 16, 17, 18, 19, 20, ...) und einer Vielzahl an m Stützen, wobei die Anzahl an Stützen z.B. n, n+1 oder n-1 ist. Der Stabilität halber bieten sich Stege mit einer m=n+1 Konfiguration an, da dann der Steg an beiden Enden mit den entsprechenden Stützen auf der Grundstruktur und so indirekt auf den Auflagern abgestützt werden kann.

In einer erfindungsgemässen Ausführungsform des Betondeckenelements, welche mit jeder der noch zu nennenden und bereits genannten Ausführungsformen kombiniert werden kann, sofern nicht im Widerspruch dazu, sind die FRC-Stege entweder parallel zueinander ausgerichtet oder in einem Winkel kleiner 180° und grösser 0°, insbesondere in einem Winkel von 90°, sprich orthogonal oder rechtwinkelig, zueinander ausgerichtet. Umfasst das Betondeckenelement mehr als zwei FRC-Stege, so kann ein Teil der FRC-Stege parallel zueinander angeordnet sein während ein anderer Teil der FRC-Stege zum erstgenannten Teil in einem Winkel kleiner 180° und grösser 0°, insbesondere in einem Winkel von 90°, angeordnet ist.

Bei einer rechtwinkelig zu erstellenden Betondecke bietet sich meist die Verwendung von einer Anzahl untereinander parallel angeordneter längslaufender FRC-Stege und einer Anzahl untereinander parallel angeordneter querlaufender FRC-Stege an, wobei die querlaufenden FRC-Stege orthogonal zu den längslaufenden FRC-Stegen ausgerichtet sind. Bei ausgefalleneren Deckengrundformen, wie z.B. hexagonal, in Form eines Parallelogramms oder trapezförmig, kann es für die Stabilität der Betondecke vorteilhaft sein z.B. zu den untereinander und zu einer Seite des Parallelogramms parallel angeordneten längslaufenden FRC-Stegen einen Satz untereinander und zu der anderen Seite des Parallelogramms parallel angeordneter querlaufender FRC-Stege zu verwenden, wobei Schnittwinkel der längslaufenden und querlaufenden FRC-Stege von z.B. 60°, 70°, 75°, 80° oder 85° verwirklicht werden. Bei einer Trapezform wiederum kann es ratsam sein lediglich den Satz längslaufende FRC-Stege untereinander und zu den beiden parallelen Seite des Trapezes parallel auszurichten, die querlaufenden FRC-Stege wiederum nicht parallel, sondern in einem spitzen Winkel zueinander anzuordnen, sodass daraus auch ein unterschiedlicher Schnittwinkel mit den längslaufenden FRC-Stegen resultiert. Bei einer hexagonalen Betondeckengrundform kann beispielsweise auf eine zu einem Spinnennetz vergleichbare FRC-Steg-Anordnung zurückgegriffen werden. Die Anordnung kann sich auch explizit auf die Auflagersituation beziehen, z.B. ist die Decke rechteckig, aber die Auflagerpunkte im Trapez angeordnet. Dann kann es eventuell vorteilhaft sein, die Stege über die Deckenstützen, sprich Auflager, laufen zu lassen oder parallel zur Auflagersituation. Nichtsdestotrotz wird eine orthogonale Anordnung der längs- und querlaufenden FRC-Stege voraussichtlich die am meisten verwendete sein, aber nicht immer werden die FRC-Stege dabei parallel zu den Deckenrändern ausgerichtet sein.

In einer erfindungsgemässen Ausführungsform des Betondeckenelements, welche mit jeder der noch zu nennenden und bereits genannten Ausführungsformen kombiniert werden kann, sofern nicht im Widerspruch dazu, ist mindestens ein Teil der parallel zueinander angeordneten FRC-Stege auch äquidistant zueinander angeordnet.

Grundsätzlich kann davon ausgegangen werden, dass je gleichmässiger die Anordnung der FRC-Stege ist, desto wahrscheinlicher ist es, dass die Betondecke an allen Stellen die gleiche Stabilität aufweist. Eine äquidistante Anordnung wiederum trägt zu einer gleichmässigen Anordnung bei. Typische Abstände parallel angeordneter FRC-Stege liegen in der Grössenordnung 20 cm oder gar 50 cm bis 200 cm oder gar 300 cm.

In einer erfindungsgemässen Ausführungsform des Betondeckenelements, welche mit jeder der noch zu nennenden und bereits genannten Ausführungsformen kombiniert werden kann, sofern nicht im Widerspruch dazu, ist mindestens ein Teil der parallel zueinander angeordneten FRC-Stege nicht äquidistant zueinander angeordnet.

Eine solche Anordnung kann von der Statik her gegenüber einer äquidistanten Anordnung bevorzugt sein und bietet nutzungstechnisch keinen Nachteil. Insbesondere wenn mehrere Betondeckenelemente aneinandergereiht werden müssen zum Überspannen eines Raumes, kann eine nicht-äquidistante Anordnung die Folge sein. Z.B. wenn zwei FRC-Platten von 2.4 m Breite mit je zwei FRC-Stegen im Abstand von 1.6 m zueinander und mit einem Abstand von 0.4 m zum Rand der FRC-Platte nebeneinander angeordnet werden.

In einer erfindungsgemässen Ausführungsform des Betondeckenelements, welche mit jeder der noch zu nennenden und bereits genannten Ausführungsformen kombiniert werden kann, sofern nicht im Widerspruch dazu, ist ein Teil der parallel zueinander angeordneten FRC-Stege derart nicht äquidistant zu einem anderen Teil der parallel zueinander angeordneten FRC-Stege angeordnet, dass mindestens ein Bereich höherer FRC-Steg-Dichte gebildet wird.

Eine höhere FRC-Steg-Dichte, sprich mehr FRC-Stege pro Flächeneinheit der Oberseite der Grundstruktur, sorgt für eine lokale Verstärkung des Betondeckenelements. Eine solche ist z.B. vorteilhaft, um das Betondeckenelement in denjenigen Bereichen zu verstärken, die im Herstellungsprozess der Betondecke durch das Aufliegen bzw. Abstützen des Betondeckenelements auf Gebäudeseitenwänden oder Deckenstützen besonders beansprucht werden. Solche engeren Abstände können im Bereich der Hälfte bis ein Viertel der gewöhnlichen Abstände liegen, also z.B. 5 cm oder 10 cm bis 75 cm oder 150 cm, insbesondere 30 cm, betragen.

In einer erfindungsgemässen Ausführungsform des Betondeckenelements, welche mit jeder der noch zu nennenden und bereits genannten Ausführungsformen kombiniert werden kann, sofern nicht im Widerspruch dazu, sind mindestens zwei der FRC-Stege derart in einem Winkel kleiner 180° und grösser 0°, insbesondere orthogonal, zueinander angeordnet, dass die mindestens zwei FRC-Stege sich an einem Schnittpunkt schneiden. An diesem Schnittpunkt sind die mindestens zwei FRC-Stege ineinander bzw. aufeinander gesteckt.

Die Steckverbindung ermöglicht einerseits eine Fixierung der Ausrichtung der FRC-Stege zueinander und sorgt andererseits für die Befestigung, oder leistet zumindest einen Beitrag zur Befestigung, des auf- bzw. eingesteckten FRC-Stegs, sofern der andere FRC-Steg bereits anderweitig mit der Grundstruktur verbunden ist. Des Weiteren kann die Steckverbindung dafür sorgen, dass die FRC-Stege auf der Oberseite der Grundstruktur eine plane Abstützfläche bilden, bspw. für im weiteren Verlauf anzubringende Parkettdielen oder dergleichen.

Mindestens einer der zwei FRC-Stege kann am Schnittpunkt eine Nut aufweisen.

Insbesondere alleinig der im Winkel zu einem bereits vorhandenen FRC-Steg anzuordnende weitere FRC-Steg kann eine Nut aufweisen, um auf den bereits vorhandenen FRC-Steg aufgesteckt zu werden. Die Oberkante des später angeordneten weiteren FRC-Stegs würde dann weiter oben liegen als die des bereits vorhandenen FRC-Stegs.

In einer erfindungsgemässen Ausführungsform des Betondeckenelements, welche mit jeder der noch zu nennenden und bereits genannten Ausführungsformen kombiniert werden kann, sofern nicht im Widerspruch dazu, weisen die mindestens zwei der FRC-Stege am Schnittpunkt je eine gegenläufige Nut auf.

Betrachtet man die beiden FRC-Stege an ihrem Schnittpunkt genauer, so weist der eine FRC-Steg eine nach oben geöffnete Nut auf und der andere FRC-Steg eine in entgegengesetzte Richtung, also nach unten geöffnete Nut auf. Damit das Ineinanderstecken funktioniert, muss die Nut des einen FRC-Stegs mindestens so breit sein, wie der andere FRC-Steg breit ist, und andersherum. Damit der Vorgang des Steckens nicht unnötig kompliziert wird, sind die Nuten meist etwas grosszügiger ausgelegt und sorgen so für ein gewisses Spiel. In Konsequenz bildet sich anstelle einer Kontaktfläche ein leerer Raum um die FRC-Stege am Schnittpunkt aus. Um nun auch noch eine plane Abstützfläche bilden zu können, entspricht die Tiefe der beiden Nuten in Summe mindestens der Höhe der eine identische Höhe aufweisenden FRC-Stege am Schnittpunkt.

Damit die FRC-Stege in der Lage sind auch grosse Längsdruckkräfte aufzunehmen, können z.B. die nach oben geöffneten Nuten mit einem Füllmittel (z.B. Mörtel) versehen werden, um die Spaltungenauigkeit, sprich das oben beschriebene Spiel und den dadurch entstehenden leeren Raum, auszugleichen.

In einer erfindungsgemässen Ausführungsform des Betondeckenelements, welche mit jeder der noch zu nennenden und bereits genannten Ausführungsformen kombiniert werden kann, sofern nicht im Widerspruch dazu, ist ein FRC-Steg, oder ein Fragment eines sich aus mehreren Fragmenten zusammensetzenden FRC-Stegs, in einem Winkel kleiner 180° und grösser 0°, insbesondere orthogonal, zwischen mindestens zwei anderen FRC-Stegen angeordnet und mit diesen verbunden.

Die Verbindung des einen FRC-Stegs bzw. des Fragments eines solchen mit den beiden querlaufenden anderen FRC-Stegen kann bspw. mithilfe eines Bindemittels, wie z.B. Mörtel oder Kleber erfolgen. Mit einem solchen können die Abstände zwischen den Enden des einen FRC-Stegs bzw. des FRC-Steg-Fragments zu den jeweils angrenzenden beiden anderen FRC-Stegen mindestens teilweise ausgefüllt werden. Alternativ können das Fragment bzw. der FRC-Steg konisch geformt sein und so zwischen die beiden anderen FRC-Stege gesteckt respektive geklemmt werden. Eine Klemmverbindung kann z.B. auch bereitgestellt werden durch Treiben eines Keils oder dergleichen in den Abstand hinein.

In einer erfindungsgemässen Ausführungsform des Betondeckenelements, welche mit jeder der noch zu nennenden und bereits genannten Ausführungsformen kombiniert werden kann, sofern nicht im Widerspruch dazu, sind mindestens drei, insbesondere mindestens vier, der FRC-Stege derart zueinander angeordnet, dass sie einen Raum einschliessen, welcher mindestens teilweise mit Beton ausgegossen ist.

Durch das Ausgiessen eines oder mehrerer solcher Räume kann das Betondeckenelement gezielt bspw. punktuell, aber auch grossflächiger verstärkt werden.

In einer erfindungsgemässen Ausführungsform des Betondeckenelements, welche mit jeder der noch zu nennenden und bereits genannten Ausführungsformen kombiniert werden kann, sofern nicht im Widerspruch dazu, ist mindestens einer der FRC-Stege massiv ausgebildet und/oder weist mindestens einer der FRC-Stege eine Kavität auf.

Die individuelle Ausgestaltung der FRC-Stege bietet die Möglichkeit das Betondeckenelement optimal an die Stabilitätsanforderungen der darauf aufbauenden Betondecke anzupassen. In einer einfacheren Ausführungsform sind bspw. alle FRC-Stege identisch ausgebildet und massiv. In einer spezielleren Ausführungsform hingegen kann gezielt ein Teil, oder auch die gesamte Zahl an FRC-Stegen mit je einer oder auch mehreren Kavitäten, bspw. in Form eines Schlitzes, designet sein. In diese Kavitäten können dann obere Zugbewehrungen eingelegt werden. Um deren Verbund mit den FRC-Stegen sicherzustellen, werden die Kavitäten mit z.B. Mörtel oder Kleber ausgegossen. Insbesondere über Deckenstützen oder Wänden ist der Einsatz von oberen Zugbewehrungen mithilfe der Kavitäten sinnvoll. Als obere Zugbewehrung kommen bspw. Zugelemente, wie ein Zugstab, oder auch Stahlarmierungen oder Textilarmierung (z.B. auf der Basis von Glas, Carbon, Aramid, Basalt, ...) in Frage. Eine Kavität ist bspw. 10 mm bis 30 mm breit. Bei stärkeren, also dickeren, Stegen kann sie auch breiter sein, bspw. bis Stegbreite minus 20mm. Eine Kavität ist bspw. 40 mm bis 100 mm oder sogar bis 150 mm tief.

In einer erfindungsgemässen Ausführungsform des Betondeckenelements, welche mit jeder der noch zu nennenden und bereits genannten Ausführungsformen kombiniert werden kann, sofern nicht im Widerspruch dazu, umfasst die Grundstruktur mindestens zwei flächig nebeneinander angeordnete und zueinander benachbarte FRC-Platten.

Je nach Grösse der geplanten Betondecke aber auch in Abhängigkeit von den Bedingungen auf der Baustelle, wie z.B. den Transportwegen dahin etc., kann es vorteilhaft sein, die FRC-Platten und FRC-Stege getrennt anzuliefern und dann vor Ort passgenaue Betondeckenelemente herzustellen, deren Grundstruktur mehr als einer FRC-Platte bedarf. Soll die Betondecke bspw. eine Fläche von 8 m x 8 m abdecken, können aber nur FRC-Platten mit einer Fläche von 2 m x 8 m ohne Spezialtransport auf die Baustelle geliefert werden, so können für diese Betondecke vor Ort insgesamt vier Betondeckenelemente mit je vier FRC-Platten in der Grundstruktur hergestellt werden. Aber auch für den Fall, dass Betondeckenelemente in Sondergrösse gewünscht werden, können diese einfach aus mehreren in einer Standardgrösse fabrizierten FRC-Platten zusammengesetzt und sogar noch zugeschnitten werden.

In einer erfindungsgemässen Ausführungsform des Betondeckenelements, welche mit jeder der noch zu nennenden und bereits genannten Ausführungsformen kombiniert werden kann, sofern nicht im Widerspruch dazu, sind die FRC-Platten mindestens teilweise entlang ihrer aufeinander ausgerichteten Seiten verklebt.

Um eine stabile Grundstruktur, welche mehr als eine FRC-Platte umfasst, bereitstellen zu können, können die FRC-Platten miteinander verbunden werden. Insbesondere Kleben, bspw. basierend auf einem Bindemittel, wie z.B. Mörtel, Kleber etc., ist eine mögliche Verbindungstechnik.

In einer erfindungsgemässen Ausführungsform des Betondeckenelements, welche mit jeder der noch zu nennenden und bereits genannten Ausführungsformen kombiniert werden kann, sofern nicht im Widerspruch dazu, ist mindestens ein Verbindungselement mindestens teilweise auf der Oberseite entlang der aufeinander ausgerichteten Seiten der flächig nebeneinander angeordneten und zueinander benachbarten FRC-Platten angebracht.

Um eine besonders stabile Grundstruktur zu erwirken, kann entlang der aufeinander ausgerichteten Seiten der flächig nebeneinander angeordneten und zueinander benachbarten FRC-Platten ein Verbindungselement in Form einer Zugverbindung installiert werden, bspw. durch ein Verbindungspatch (z.B. Lamelle aus Faserverbundkunststoff (FRCK), Kohlefaserkunststoff (CFK), oder z.B. Stahl oder FRP(Fiber Reinforced Plastic)-Plattenstreifen), welches von der Oberseite her aufgeklebt wird.

In einer erfindungsgemässen Ausführungsform des Betondeckenelements, welche mit jeder der noch zu nennenden und bereits genannten Ausführungsformen kombiniert werden kann, sofern nicht im Widerspruch dazu, weist mindestens eine Stütze endständig und der Oberseite zugewandt einen Fortsatz auf. Gleichzeitig weist eine FRC-Platte der Grundstruktur eine Ausnehmung auf, die grösser ausgebildet ist als der Fortsatz. Entsprechend sind Fortsatz und Ausnehmung nicht auf Formschluss dimensioniert. Der Fortsatz ist in der Ausnehmung angeordnet und darin fixiert.

Die Fixierung kann bspw. mithilfe eines Füllmittels erfolgen. Als Füllmittel in Frage kommt z.B. ein Bindemittel, wie ein Kleber oder Mörtel, aber auch z.B. Sand. Darüber hinaus kann eine Fixierung z.B. durch Anbringen einer Sperre bspw. in Form eines (z.B. keilförmigen) Brettchens, welches von oben in die Ausnehmung eingetrieben wird und diese derart verkleinert, dass der Fortsatz darin "verkeilt" ist. Je nach gewählter Fixationsmethode kann es vorteilhaft sein, die Aussenseiten des Fortsatzes mindestens teilweise aufzurauen, um eine bessere Haftung des Füllmittels und insbesondere des Bindemittels zu ermöglichen. Grundsätzlich kann der Fortsatz im Querschnitt verschiedenste Formen aufweisen, wie z.B. rechteckig, rund oder oval. Die Anzahl an Fortsätzen pro Stütze und deren Ausgestaltung kann ebenfalls variieren. Bspw. kann an jeder Stütze oder nur an jeder zweiten oder dritten Stütze je einen Fortsatz angeordnet sein, welcher sich z.B. bei einer Stütze über deren gesamte Längsausdehnung erstreckt, bei einer anderen Stütze wiederum nur einen Teil der Längsausdehnung in Beschlag nimmt. Es können aber an einer Stütze auch mehrere, z.B. zwei, drei, vier etc., kürzer ausgebildete Fortsätze vorhanden sein, die der Länge nach nebeneinander angeordnet sind. Die Ausnehmungen der FRC-Platte(n) bzw. der Grundstruktur sind entsprechend entweder komplementär angeordnet oder in Form einer durchgehenden Nut realisiert.

Die entstehende Verbindung, hier Steck-Pass-Verbindung genannt, da der Fortsatz einerseits in die Ausnehmung gesteckt und darin durch das Füllmittel eingepasst wird, vereint zwei Konzepte. Einerseits werden zwei Teile mit einer Längsbewegung ineinander verkeilt, sodass eine Belastung der FRC-Platten auf Querzug möglich wird. Andererseits wird eine Verzahnung in Querrichtung zu den FRC-Platten gefügt, sodass sehr grosse Längskräfte mit der Verbindung aufgenommen werden können. Indem die Steck-Pass-Verbindung des Betondeckenelements zu Beginn nicht auf Formschluss basiert, sondern der Fortsatz und die Ausnehmung ein gewisses Spiel haben, dürfen die Toleranzen bei deren Ausbildung verhältnismässig gross sein, was die Fertigung vereinfacht. Um trotzdem eine starke Verbindung in Form einer Verkeilung zu erreichen, wird ein Füllmittel in die Ausnehmung eingebracht, welche das Spiel ausgleicht bzw. kompensiert, bspw. durch Eingiessen eines Bindemittels (z.B. hydraulisch gebundener Mörtel), Einfüllen von Sand als Füllmittel oder Eintreiben eines Keils oder eines Plättchens, wobei hier der Keil respektive das Plättchen als Füllmittel angesehen werden kann. So kann auf den Einsatz von Schrauben oder organischem Kleber vollständig verzichtet werden bei der Verbindung zwischen FRC-Steg und FRC-Platte.

Da es von der Herstellung her einfacher ist, die Stützen der FRC-Stege mit entsprechenden Fortsätzen und die FRC-Platten mit entsprechenden Ausnehmungen auszustatten, adressieren die Ausführungsbeispiele vorwiegend diese Ausführungsform. Es ist jedoch auch ohne weiteres möglich die Steck-Pass-Verbindung dieser beiden Elemente vice versa zu implementieren, sprich indem die FRC-Platte mit Fortsätzen und der FRC-Steg mit Ausnehmungen (evtl. realisiert in Form einer durchgehenden Nut) versehen werden. Die Ausnehmungen können dann - anstelle der Fortsätze - entsprechend dem bereits beschriebenen Anordnungsmuster für Fortsätze angeordnet werden. Ebenso ist es möglich diese beiden Varianten zu kombinieren, sprich FRC-Platten mit Fortsätzen und Ausnehmungen sowie FRC-Stege mit Fortsätzen und Ausnehmungen auszubilden, um die Steck-Pass-Verbindung zu realisieren.

In einer erfindungsgemässen Ausführungsform des Betondeckenelements, welche mit jeder der noch zu nennenden und bereits genannten Ausführungsformen kombiniert werden kann, sofern nicht im Widerspruch dazu, weisen der Fortsatz sowie die Ausnehmung im Querschnitt die Form eines Keils auf.

Der die Form definierende Keil kann hierbei ein Keil mit einer schiefen Ebene oder mit zwei schiefen Ebenen sein. Aufgrund der Geometrie des Fortsatzes, sprich der Keilform, verklemmt dieser in der Ausnehmung bei Querzug. Die Fixierung des Fortsatzes in der Ausnehmung erfolgt bevorzugt mithilfe eines Füllmittels, wie z.B. eines Bindemittels (z.B. Mörtel, Kleber, ...) oder eines Sandes, um die Steck-Pass-Verbindung zu realisieren. In dieser Ausführung ist die Steck-Pass-Verbindung besonders stark und kann sehr hohe Längskräfte und auch Querzugkräfte gut aufnehmen.

In einer erfindungsgemässen Ausführungsform des Betondeckenelements, welche mit jeder der noch zu nennenden und bereits genannten Ausführungsformen kombiniert werden kann, sofern nicht im Widerspruch dazu, sind die Dimension der Ausnehmung und die Dimension des Fortsatzes derart aufeinander abgestimmt, dass der Fortsatz von der Oberseite her in die Ausnehmung einbringbar ist, insbesondere indem die Ausnehmung an ihrer engsten Stelle grösser ausgebildet ist als der Fortsatz an seiner breitesten Stelle.

Der Fortsatz und die Ausnehmung werden in dieser Ausführungsform mit so viel Spiel hergestellt, dass sie wie eine Verzahnung in Querrichtung gefügt werden können, sprich der Fortsatz von der Oberseite her in die Ausnehmung eingebracht werden kann. Damit sie sich quer nicht mehr lösen und in diese Richtung sogar Kräfte aufnehmen können, wird der Spalt zwischen Fortsatz und Ausnehmung, wie bereits beschrieben, mit Mörtel, Kleber, Sand, Keil, Plättchen oder einem anderen Füllmaterial vergossen bzw. verklemmt.

In einer erfindungsgemässen Ausführungsform des Betondeckenelements, welche mit jeder der noch zu nennenden und bereits genannten Ausführungsformen kombiniert werden kann, sofern nicht im Widerspruch dazu, weisen sowohl der Fortsatz als auch die Ausnehmung im Querschnitt die Form eines Keils mit nur einer schiefen Ebene auf.

Überraschenderweise ist es nicht notwendig, dass sowohl die Ausnehmung als auch der Fortsatz im Querschnitt die Form eines Keils mit zwei schiefen Ebenen aufweisen, vielmehr stellen sich die vorteilhaften Eigenschaften, wie das Aufnehmen hoher Längskräfte und auch Querzugkräfte, bereits bei Vorhandensein eines Querschnitts in Form eines Keils mit lediglich einer schiefen Ebene ein, was wiederum eine einfachere Fertigung bedingt.

Ein Aspekt der Erfindung betrifft eine Betondecke, welche mindestens ein vorgängig beschriebenes Betondeckenelement umfasst.

Neben der gravierenden Gewichtseinsparung im Vergleich zu einer gewöhnlichen Stahlbetondecke können basierend auf den erfindungsgemässen Betondeckenelementen auch erheblich Ressourcen eingespart werden. Die Einsparungen betreffen dabei zwar in erster Linie die Decke an und für sich, wirken sich jedoch auch auf die die Decke tragenden Strukturen aus. Wird die Decke leichter, können auch die Wände und tragenden Säulen weniger massiv ausgebildet werden. Ein weiterer Vorteil einer Bauweise basierend auf den beschriebenen Betondeckenelementen ist, dass ein Grossteil der Arbeiten in einer Werkhalle ausgeführt werden können und die Baustellenarbeit wesentlich verkürzt und ebenfalls wesentlich weniger wetterabhängig gemacht wird. Nichtsdestotrotz ist es möglich grosse Decken zu bauen, welche wesentlich grösser sind als die auf einem Lastwagen zu transportierenden einzelnen Elemente (z.B. Betondeckenelemente oder FRC-Platten). Die vor Ort zusammengesetzte Grundstruktur trägt in mehrere Richtungen und muss final nach dem Deckenherstellungsvorgang bspw. nur auf drei oder vier Deckenstützen stehen.

In einer erfindungsgemässen Ausführungsform der Betondecke, welche mit jeder der noch zu nennenden Ausführungsformen kombiniert werden kann, sofern nicht im Widerspruch dazu, umfasst diese mindestens eine Leitung, welche auf der Oberseite der Grundstruktur angeordnet und durch mindestens eine Aussparung eines FRC-Stegs geführt ist.

Bei herkömmlichen Stahlbetondecken werden die Leitungen in Beton gegossen, sodass ein nachträgliches Verlegen von Leitungen mit einem immensen Aufwand verbunden ist. Die erfindungsgemässen Betondeckenelemente erlauben es jedoch, die Leitungen durch die Aussparungen, bspw. in Form von Bögen, der FRC-Stege zu führen und machen ein Einbetonieren überflüssig. So können Leitungen auch nach Fertigstellen der Betondecke, z.B. im Zuge eines Umbaus, einfach und unkompliziert verlegt werden. Da nicht in jeder Decke Leitungen verlegt werden müssen, handelt es sich hierbei selbstverständlich um ein optionales Merkmal.

In einer erfindungsgemässen Ausführungsform der Betondecke, welche mit jeder der noch zu nennenden und bereits genannten Ausführungsformen kombiniert werden kann, sofern nicht im Widerspruch dazu, umfasst die Betondecke eine auf den FRC-Stegen abgestützte Deckschicht. Eine derartige Deckschicht kann beispielsweise Bodenplatten aus Holz (z.B. Parkett), Stein (z.B. Dachterrassenplatten), Keramik (z.B. Fliessen), und/oder FRC-Beton umfassen.

Indem die Deckschicht auf den FRC-Stegen abgestützt wird, ist eine Zugänglichkeit der gesamten Deckenstruktur, insbesondere der Betondeckenelemente und der ggfs. darin verlegten Leitungen, von oben her gewährleistet. Dies macht Renovations- und Instandhaltearbeiten besonders unkompliziert.

Ein weiterer Aspekt der Erfindung betrifft die Verwendung einer Steck-Pass-Verbindung zum Verbinden zweier FRC-Betonelemente.

Die Steck-Pass-Verbindung basiert, wie bereits beschrieben, auf einem Fortsatz, bevorzugt aufweisend im Querschnitt die Form eines Keils, und einer Ausnehmung, bevorzugt aufweisend im Querschnitt die Form eines Keils, in welche der Fortsatz eingebracht und darin fixiert ist. Die Fixierung erfolgt mithilfe eines Füllmittels. Eines der FRC-Betonelemente weist den Fortsatz auf, das andere FRC-Betonelement wiederum weist die Ausnehmung auf.

Ein wiederum weiterer Aspekt der Erfindung betrifft ein Verfahren zum Herstellen einer Betondecke und umfasst ein Bereitstellen mindestens eines Betondeckenelements. Weiter umfasst das Verfahren ein Anordnen mindestens einer Leitung auf der Oberseite der Grundstruktur sowie Führen dieser Leitung durch mindestens eine Aussparung eines FRC-Stegs und/oder ein Abstützen einer Deckschicht auf den FRC-Stegen.

In einer erfindungsgemässen Ausführungsform des Verfahrens, welche mit jeder der noch zu nennenden und bereits genannten Ausführungsformen kombiniert werden kann, sofern nicht im Widerspruch dazu, umfasst das Verfahren ein Bereitstellen mindestens zweier Betondeckenelemente sowie ein Anordnen der mindestens zwei Betondeckenelementen flächig nebeneinander. Optional, insbesondere im Anschluss kann das Verfahren ein Verkleben der mindestens zwei Betondeckenelementen mindestens teilweise entlang ihrer aufeinander ausgerichteten Seiten umfassen. Ebenfalls optional als Ergänzung oder Alternative kann das Verfahren ein Anbringen mindestens eines Verbindungselements auf der Oberseite mindestens teilweise entlang der aufeinander ausgerichteten Seiten der flächig nebeneinander angeordneten und zueinander benachbarten Betondeckenelemente umfassen.

Das Verfahren kann ein Anordnen von mindestens einem zusätzlichen FRC-Steg auf der Oberseite der Grundstruktur umfassen.

Das Anordnen erfolgt beispielsweise in einem Winkel von kleiner 180° und grösser 0° zu dem mindestens einen bereits vorhandenen FRC-Steg des mindestens einen Betondeckenelements. Das Anordnen umfasst beispielsweise ein Stecken des mindestens einen zusätzlichen FRC-Stegs auf den mindestens einen bereits vorhandenen FRC-Steg.

Ein Aspekt der Erfindung betrifft ein weiteres Verfahren zum Herstellen einer Betondecke und umfasst ein Bereitstellen mindestens einer FRC-Platte zum Bilden einer Grundstruktur. Weiter umfasst das Verfahren optional ein Anordnen von mindestens einer Leitung auf der Oberseite der Grundstruktur und ein Anordnen von mindestens einem FRC-Steg auf der Oberseite der Grundstruktur. Darüber hinaus umfasst das Verfahren ein Abstützen einer Deckschicht auf den FRC-Stegen. Insbesondere werden die Schritte in der oben widergegebenen Reihenfolge ausgeführt.

Die mindestens eine FRC-Platte weist bevorzugt Ausnehmungen auf, deren Querschnitt keilförmig ist. Die mindestens eine Leitung wird bevorzugt derart angeordnet, dass die Ausnehmungen frei bleiben. Das Anordnen des mindestens einen FRC-Stegs erfolgt bevorzugt durch Einbringen eines im Querschnitt keilförmigen Fortsatzes der Stützen der FRC-Stege in je eine Ausnehmung und Fixieren des Fortsatzes in der Ausnehmung mithilfe eines Füllmittels.

In einer erfindungsgemässen Ausführungsform des Verfahrens, welche mit jeder der noch zu nennenden und bereits genannten Ausführungsformen kombiniert werden kann, sofern nicht im Widerspruch dazu, umfasst das Verfahren ein Anordnen von mindestens einem weiteren FRC-Steg auf der Oberseite der Grundstruktur.

Das Anordnen erfolgt insbesondere in einem Winkel von kleiner 180° und grösser 0° zu dem bereits angeordneten mindestens einen FRC-Steg und/oder umfasst insbesondere ein Stecken des mindestens einen zusätzlichen FRC-Stegs auf den mindestens einen bereits angeordneten FRC-Steg.

In einer erfindungsgemässen Ausführungsform des Verfahrens, welche mit jeder der noch zu nennenden und bereits genannten Ausführungsformen kombiniert werden kann, sofern nicht im Widerspruch dazu, umfasst das Verfahren ein Bereitstellen mindestens zweier FRC-Platten zum Bilden einer Grundstruktur und ein Anordnen der mindestens zwei FRC-Platten flächig nebeneinander. Optional umfasst das Verfahren weiter insbesondere ein Verkleben der mindestens zwei FRC-Platten mindestens teilweise entlang ihrer aufeinander ausgerichteten Seiten. Ebenfalls optional, als Ersatz oder zusätzlich zu dem eben beschriebenen Schritt, umfasst das Verfahren insbesondere ein Anbringen mindestens eines Verbindungselements auf der Oberseite mindestens teilweise entlang der aufeinander ausgerichteten Seiten der flächig nebeneinander angeordneten und zueinander benachbarten FRC-Platten. Die mindestens zwei FRC-Platten weisen bevorzugt im Querschnitt keilförmige Ausnehmungen auf.

Ein weiterer Aspekt der Erfindung betrifft ein Verfahren zum Herstellen eines Betondeckenelements und umfasst ein Bereitstellen mindestens einer FRC-Platte zum Bilden einer Grundstruktur und ein Anordnen von mindestens einem FRC-Steg auf der Oberseite der Grundstruktur.

Das Verfahren umfasst optional ein Anordnen von mindestens einem weiteren FRC-Steg auf der Oberseite der Grundstruktur, bevorzugt in einem Winkel von kleiner 180° und grösser 0° zu dem bereits angeordneten mindestens einen FRC-Steg, und/oder umfasst bevorzugt ein Stecken des mindestens einen zusätzlichen FRC-Stegs auf den mindestens einen bereits angeordneten FRC-Steg.

Die mindestens zwei FRC-Platten weisen bevorzugt im Querschnitt keilförmige Ausnehmungen auf. Das Anordnen von mindestens einem FRC-Steg erfolgt insbesondere durch Einbringen eines im Querschnitt keilförmigen Fortsatzes der Stützen des FRC-Stegs in je eine Ausnehmung und Fixieren des Fortsatzes in der Ausnehmung mithilfe eines Füllmittels.

Ausführungsbeispiele der vorliegenden Erfindung sowie Ausführungsbeispiele, die nicht die vorliegende Erfindung umfassen, sondern zum Verständnis der Erfindung beitragen sollen, werden nachstehend anhand von Figuren noch näher erläutert. Es zeigen
Fig. 1a einen schematischen Längsschnitt durch eine bekannte Betondecke;
Fig. 1b einen schematischen Längsschnitt durch eine Betondecke;
Fig. 2a einen schematischen Längsschnitt durch eine Ausführungsform eines FRC-Stegs;
Fig. 2b einen schematischen Längsschnitt durch eine weitere Ausführungsform eines FRC-Stegs;
Fig. 2c einen schematischen Längsschnitt durch ein erfindungsgemässes Betondeckenelements;
Fig. 3a einen schematischen Querschnitt durch eine Ausführungsform eines erfindungsgemässen Betondeckenelements;
Fig. 3b einen schematischen Querschnitt durch eine Ausführungsform eines erfindungsgemässen Betondeckenelements;
Fig. 3c einen schematischen Querschnitt durch eine Ausführungsform eines erfindungsgemässen Betondeckenelements;
Fig. 3d eine perspektivische Draufsicht auf eine Ausführungsform eines erfindungsgemässen Betondeckenelements;
Fig. 4 eine perspektivische Draufsicht auf eine Ausführungsform eines erfindungsgemässen Betondeckenelements;
Fig. 5 eine perspektivische Draufsicht auf mehrere nebeneinander angeordnete Betondeckenelemente einer erfindungsgemässen Ausführungsform;
Fig. 6a eine perspektivische Draufsicht auf eine Ausführungsform eines erfindungsgemässen Betondeckenelements aufliegend auf Deckenstützen;
Fig. 6b eine schematische Seitenansicht eines Deckenelements;
Fig. 6c eine schematische Draufsicht auf ein erfindungsgemässes Betondeckenelement;
Fig. 6d einen schematischen Schnitt durch ein Betondeckenelement;
Fig. 7a eine perspektivische Draufsicht auf eine Ausführungsform eines erfindungsgemässen Betondeckenelements mit einem mit Bindemittel ausgegossenen Raum;
Fig. 7b eine perspektivische Draufsicht auf eine weitere Ausführungsform eines erfindungsgemässen Betondeckenelements mit einem mit Bindemittel ausgegossenen Raum;
Fig. 8 eine perspektivische Draufsicht auf zwei miteinander verbundene erfindungsgemässe Betondeckenelemente;
Fig. 9 eine perspektivische Draufsicht auf eine teilweise mit einer Deckschicht versehene erfindungsgemässe Betondecke;
Fig. 10a bis 10e eine Ausführungsform eines erfindungsgemässen Verfahrens zum Herstellen einer Betondecke;
Fig. 11a bis 11e eine weitere Ausführungsform eines erfindungsgemässen Verfahrens zum Herstellen einer Betondecke;
Fig. 12a bis 12c eine weitere Ausführungsform eines erfindungsgemässen Verfahrens zum Herstellen einer Betondecke; und
Fig. 13a bis 13c schematische Schnitte durch Ausführungsformen erfindungsgemässer Betondeckenelemente aufweisen eine Steck-Pass-Verbindung.

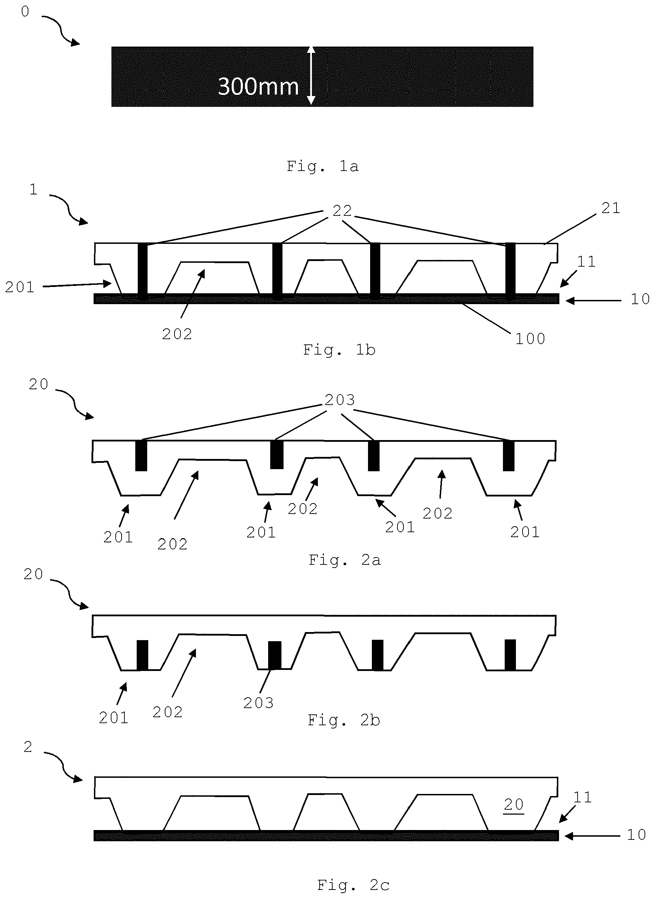

In Figur 1a ist schematisch ein Längsschnitt durch eine bekannte Betondecke 0 ohne Deckschicht gezeigt. Die Betondecke 0 ist ca. 300 mm dick und massiv. Eine derartige Betondecke 0 weist eine Nutzlast von 2 kN/m², eine ständige Auflast von 2 kN/m² und eine Eigenlast von 7.5 kN/m² auf. Daraus ergibt sich ein Total von 11.5 kN/m².

In Figur 1b ist schematisch ein Längsschnitt durch eine Betondecke 1 ohne Deckschicht gezeigt. Die Betondecke in diesem Beispiel besitzt die gleiche Fläche wie die in Fig. 1a gezeigte gewöhnliche Betondecke und ist ebenfalls ca. 300 mm dick, jedoch nicht massiv ausgebildet. Vielmehr setzt sich die Betondecke 1 zusammen aus mehreren FRC-Platten 100, welche eine Grundstruktur 10 bilden. Auf der Oberseite 11 dieser Grundstruktur 10, und somit der FRC-Platten 100, angeordnet und mit diesen verbunden sind längslaufende FRC-Stege 21 und dazu querlaufende FRC-Stege 22. Der längslaufende FRC-Steg 21, durch welchen der Längsschnitt verläuft, weist total drei Aussparungen 202 und vier Stützen 201 auf (der Übersichtlichkeit halber sind nur eine Aussparung und eine Stütze mit Bezugszeichen versehen). Die Stützen 201 sind es, welche die Verbindung zwischen der Grundstruktur 10 und dem Steg 20 bereitstellen. Weiter umfasst die gezeigte Betondecke 1 vier querlaufende FRC-Stege 22 auf, welche also im Wesentlichen orthogonal zu den längslaufenden FRC-Stegen 21 ausgerichtet sind und diese schneiden, insbesondere auf Höhe der Stützen 201 der längslaufenden FRC-Stege 21. Eine derartige erfindungsgemässe Betondecke weist eine Nutzlast von 2 kN/m², eine ständige Auflast von 2 kN/m² und eine Eigenlast von 1.8 kN/m² auf. Daraus ergibt sich ein Total von 5.8 kN/m². Vergleicht man nun die gewöhnliche Betondecke aus Fig. 1a mit der erfindungsgemässen Betondecke aus Fig. 1b wird schnell klar, welche enormen Vorteile die erfindungsgemässe Betondecke bietet. Bei gleicher Tragfähigkeit kommt diese mit einem Bruchteil an Eigenlast daher und bietet so die Möglichkeit wesentlich leichter bei gleicher Stabilität zu bauen und dies noch dazu mit einem enormen Einsparpotential an Material.

In Figur 2a ist schematisch ein Längsschnitt durch einen FRC-Steg 20 gezeigt, welcher drei Aussparungen 202 und vier Stützen 201 aufweist. Dieser FRC-Steg soll beispielsweise in der finalen Konstruktion ein längslaufender FRC-Steg sein. Um nun orthogonal zu diesem gezeigten FRC-Steg 20 verlaufende weitere FRC-Stege aufnehmen zu können, besitzt der gezeigte FRC-Steg 20 Nuten 203 auf Höhe der Stützen 201, um darin nach dem Steckprinzip einen orthogonal ausgerichteten FRC-Steg aufnehmen zu können. Die Nuten 203 befinden sich im oberen Bereich der Stützen 201 und stellen somit von der Oberseite der Grundstruktur wegzeigende Öffnungen dar.

In Figur 2b ist schematisch ein Längsschnitt durch einen FRC-Steg 20 gezeigt, welcher drei Aussparungen 202 und vier Stützen 201 aufweist (der Übersichtlichkeit halber sind nur eine Aussparung und eine Stütze mit Bezugszeichen versehen). Dieser FRC-Steg 20 soll beispielsweise in der finalen Konstruktion ein querlaufender FRC-Steg sein. Um nach dem Steckprinzip mit einem längslaufenden FRC-Steg, wie bspw. in Fig. 2a gezeigt, verbunden werden zu können, weist der FRC-Steg 20 Nuten 203 in den Stützen auf, die derart auf die Nuten der längslaufenden FRC-Stege abgestimmt sind, dass die längslaufenden und querlaufenden FRC-Stege eine ebene Fläche definieren und auf der Oberseite der Grundstruktur angeordnet ein und dieselbe Höhe aufweisen (der Übersichtlichkeit halber ist nur eine der Nuten mit einem Bezugszeichen versehen). Die Nuten 203 befinden sich im unteren Bereich der Stützen 201 und stellen somit zur Oberseite der Grundstruktur zeigende Öffnungen dar.

Figur 2c zeigt einen schematischen Längsschnitt durch ein Betondeckenelement 2 mit ausschliesslich parallel verlaufenden FRC-Stegen 20 angebracht auf der Oberseite 11 der Grundstruktur 10. Die FRC-Stege 20 können ohne Nut ausgebildet sein, da sie keine querlaufenden anderen FRC-Stege aufnehmen müssen.

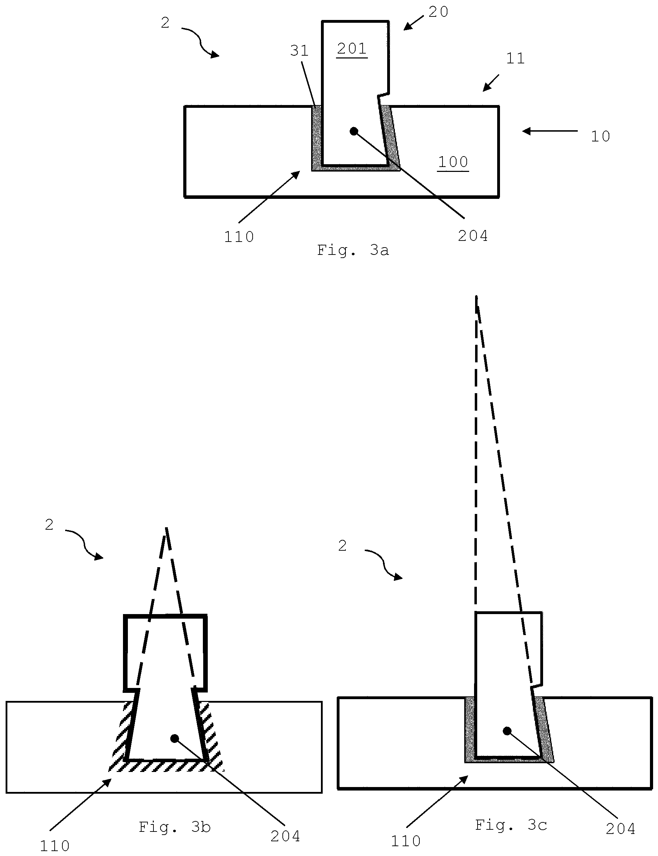

Fig. 3a zeigt einen schematischen Querschnitt durch eine Ausführungsform eines erfindungsgemässen Betondeckenelements 2. Dargestellt ist eine Steck-Pass-Verbindung zwischen einer FRC-Platte 100, welche die Grundstruktur 10 mit der Oberseite 11 bereitstellt, und einem FRC-Steg 20. Der Querschnitt verläuft durch die Stütze 201 des FRC-Stegs 20, welche einen Fortsatz 204 in Form eines Keils mit nur einer schiefen Ebene besitzt. Die FRC-Platte 100 wiederum besitzt eine Ausnehmung 110 ebenfalls in Form eines Keils mit nur einer schiefen Ebene. Die Ausnehmung 110 ist ausreichend gross konzipiert, dass der Fortsatz 204 von der Oberseite 11 her in der Ausnehmung 110 platziert werden kann. Entsprechend ist die Verbindung - vorerst -keine formschlüssige Verbindung. Damit nichtdestotrotz ein Formschluss entsteht, wird der Hohlraum zwischen der Ausnehmung 110 und dem Fortsatz 204 zumindest teilweise oder vollständig mit einem Füllmittel 31, wie z.B. Mörtel, Sand oder dergleichen, ausgegossen bzw. ausgefüllt und so verkeilt.

Fig. 3b zeigt einen schematischen Querschnitt durch eine Ausführungsform eines erfindungsgemässen Betondeckenelements 2. Im Gegensatz zu der Ausführungsform der Fig. 3a sind der Fortsatz 204 und die Ausnehmung 110 der Form eines Keils mit zwei schiefen Ebenen nachempfunden. Der Keil, welcher diese Form inspiriert, ist in gestrichelter Linie eingezeichnet.

Fig. 3c zeigt denselben Querschnitt durch das Betondeckenelement 2 wie die Fig. 3a, jedoch ist gestrichelt der Keil mit der nur einen schiefen Ebene eingezeichnet, an dessen Form sich der Fortsatz 204 der Stütze sowie die Ausnehmung 110 orientieren.

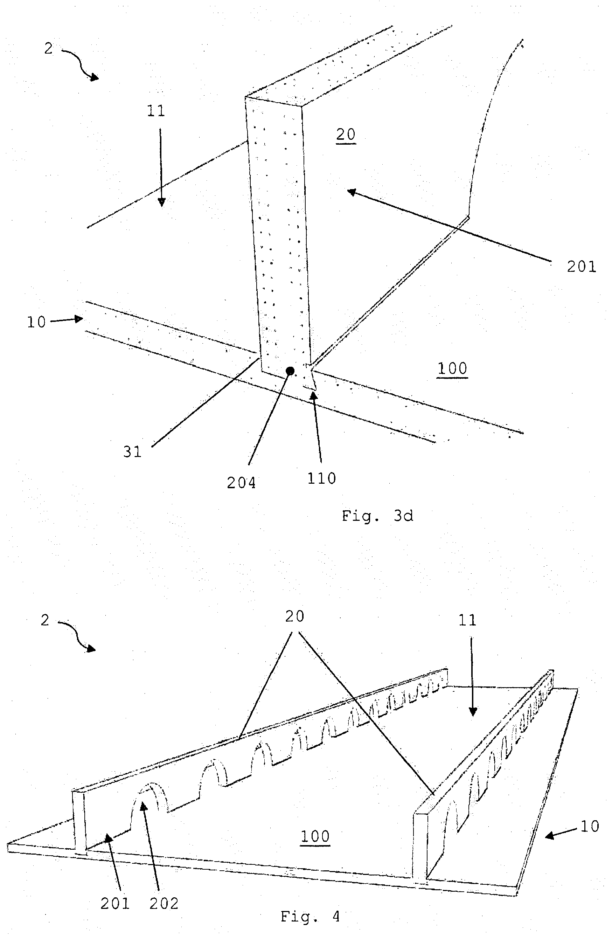

Fig. 3d zeigt eine perspektivische Draufsicht auf eine Ausführungsform eines erfindungsgemässen Betondeckenelements 2. Wie in Fig. 3a, ist auch in Fig. 3b eine Steck-Pass-Verbindung zwischen einer FRC-Platte 100, welche die Grundstruktur 10 mit der Oberseite 11 bereitstellt, und einem FRC-Steg 20 dargestellt. Der Fortsatz 204 der Stütze 201 des FRC-Stegs 20 ist eingelassen in eine längliche Ausnehmung 110 in der FRC-Platte 100, die Teil der Grundstruktur 10 mit der Oberfläche 11 ist. Die längliche Ausnehmung 110 sowie der längliche Fortsatz 204 weisen beide einen Querschnitt in Form eines Keils mit nur einer schiefen Ebene auf und sind durch ein Füllmittel 31 miteinander verbunden.

Fig. 4 zeigt eine perspektivische Draufsicht auf eine Ausführungsform eines erfindungsgemässen Betondeckenelements 2. Dessen Grundstruktur 10 besteht aus einer FRC-Platte 100, auf deren Oberseite, welche Oberseite identisch ist zu der Oberseite 11 der Grundstruktur 10, zwei FRC-Stege 20 angeordnet sind. Diese FRC-Stege 20 sind parallel zueinander ausgerichtet und identisch zueinander aufgebaut. Jeder FRC-Steg 20 weist zwölf bogenförmige Aussparungen 202 und dreizehn Stützen 201 auf (der Übersichtlichkeit halber sind nur eine Aussparung 202 und eine Stütze 201 für einen der zwei FRC-Stege 20 mit Bezugszeichen versehen). Ein derartiges Betondeckenelement 2 kann zum Herstellen einer Betondecke verwendet werden, wobei die FRC-Platte 100 als untere Schalung sowie Zuggurt dient und die FRC-Stege 20 als Druckgurt fungieren. Die FRC-Platte 100 der Grundstruktur 10 sowie die FRC-Platte(n) (nicht gezeigt), aus welcher(en) die FRC-Stege 20 geschnitten sind, wurden bspw. nur in Längsrichtung oder aber in Längs- und Querrichtung vorgespannt. Für gewöhnlich sind weder die längsgespannten mit den quergespannten Fasern noch die längsgespannten Fasern respektive die quergespannten Fasern untereinander verbunden. Die Fasern zum Längsspannen sowie die Fasern zum Querspannen können in mehreren Lagen angeordnet sein. Vorgespannt wird mit Fasern (z.B. aus Carbon, Glas, Kevlar, Basalt, Stahl, Naturfaser etc.), wobei der Begriff "Faser" sowohl ein einzelnes oder mehrere längliche und flexible Bewehrungselemente umfasst, bspw. Einzelfilamente, Multifilament, Faserbündel (z.B. verseilt oder verdrillt), Drähte, oder ein oder mehrere Rovings (typischerweise umfassend 2`000 bis ca. 16`000 Filamente). Die Netto-Querschnittfläche der Fasern (d.h. ohne Harzimprägnierung) ist z.B. kleiner als ca. 5 mm² und liegt insbesondere in einem Bereich von ca. 0.1 mm² bis ca. 1 mm². Die Zugfestigkeit der Fasern bezogen auf deren Netto-Querschnittfläche ist bspw. grösser als ca. 1000 N/mm², insbesondere grösser als ca. 1800 N/mm². Das elastische Zugdehnungsvermögen der Fasern ist bspw. grösser als ca. 1%. In einem Beispiel können die Fasern, insbesondere Carbon-Fasern, mit einer Spannung von ca. 50% bis ca. 95%, insbesondere von mindestens ca. 80%, insbesondere mindestens ca. 90%, der Bruchspannung der Fasern gespannt werden. Bspw. beträgt der Armierungsabstand (= Abstand zwischen zwei benachbarten Fasern) ca. 5 mm bis ca. 40 mm, insbesondere ca. 8 mm bis ca. 25 mm, und/oder umfasst die FRC-Platte mindestens 10, insbesondere mindestens 40, Fasern. Beispielsweise ist der Armierungsabstand kleiner oder gleich der zweifachen Höhe der FRC-Platte. Der Armierungsgehalt einer FRC-Platte beträgt bspw. mehr als 20 mm²/m Breite. Beispielsweise wird beim Vorspannen eine Spannung von mindestens ca. 30 kN/m oder mindestens ca. 300 kN/m erzeugt, abhängig von den Belastungs-Anforderungen an die FRC-Platte (Dimensionierungskraft).

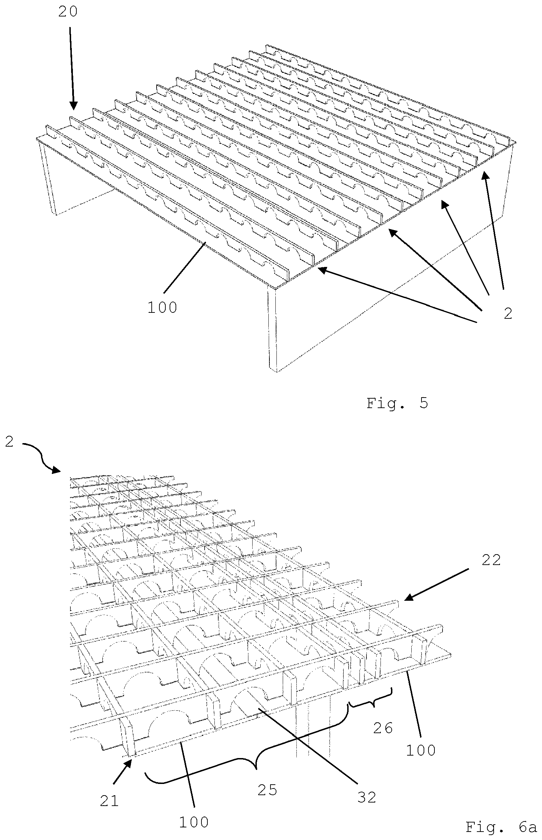

Fig. 5 zeigt eine perspektivische Draufsicht auf vier nebeneinander angeordnete Betondeckenelemente 2 derselben Ausführung. Jedes Betondeckenelement 2 weist drei zueinander parallellaufende und identisch ausgeführte FRC-Stege 20 auf, welche sich entlang der gesamten Länge der jeweiligen FRC-Platte 100 auf der sie angeordnet sind erstrecken und mit einem ihrer Stützen bündig zu dieser abschliessen. Die total vier FRC-Platten 100 sind bündig angeordnet und endständig auf je einer Seitenwand abgestützt. An den aneinandergrenzenden Seiten sind zueinander benachbarte FRC-Platten 100 miteinander verbunden. Im hier gezeigten Beispiel ist entlang der Kontaktfläche der aneinandergrenzenden Seiten der FRC-Platten 100 ein Bindemittel aufgebracht (nicht zu erkennen auf der Figur). Die je drei FRC-Stege 20 sind derart auf den FRC-Platten 100 angeordnet, dass aus dem Nebeneinanderlegen mehrerer FRC-Platten 100 wie eine grosse FRC-Platte mit äquidistant und parallel angeordneten FRC-Stegen 20 resultiert.

Fig. 6a zeigt eine perspektivische Draufsicht auf eine Ausführungsform eines erfindungsgemässen Betondeckenelements 2, welches auf Deckenstützen aufliegt (im gezeigten Ausschnitt ist eine Deckenstütze rechts vorne zu sehen). Das Betondeckenelement 2 weist sowohl längslaufende FRC-Stege 21 als auch querlaufende FRC-Stege 22 auf. Die längslaufenden FRC-Stege 21 schliessen mit einer Stütze bündig zu der FRC-Platte 100 ab, während die querlaufenden FRC-Stege 22 mit einer Aussparung bündig zu der FRC-Platte 100 abschliessen. Die querlaufenden FRC-Stege 22 sind äquidistant zueinander angeordnet, während es bei den längslaufenden FRC-Stegen 21 einen Bereich 25 mit einer zwar äquidistanten, aber breiteren Anordnung zueinander und einen Bereich 26 mit einer ebenfalls äquidistanten, aber engeren Anordnung zueinander gibt. Im gezeigten Beispiel sorgt der Bereich 26 der engeren FRC-Steg-Anordnung für eine Längsverstärkung über den Deckenstützen. An den aneinandergrenzenden Seiten sind zueinander benachbarte FRC-Platten 100 miteinander verbunden indem je eine Lamelle als Verbindungselement 32 über die gesamte Länge der FRC-Platten 100 entlang der Kontaktfläche der aneinandergrenzenden Seiten aufgeklebt ist. Dank der auch in Querrichtung laufenden FRC-Stege 22 und der aufgeklebten Verbindungsstreifen 32 können Decken mit beliebig freien Spannweiten in beide Richtungen gebaut werden, obwohl die einzelnen FRC-Platten 100 in eine Richtung in der Breite meist beschränkt sind (wegen dem Transport).

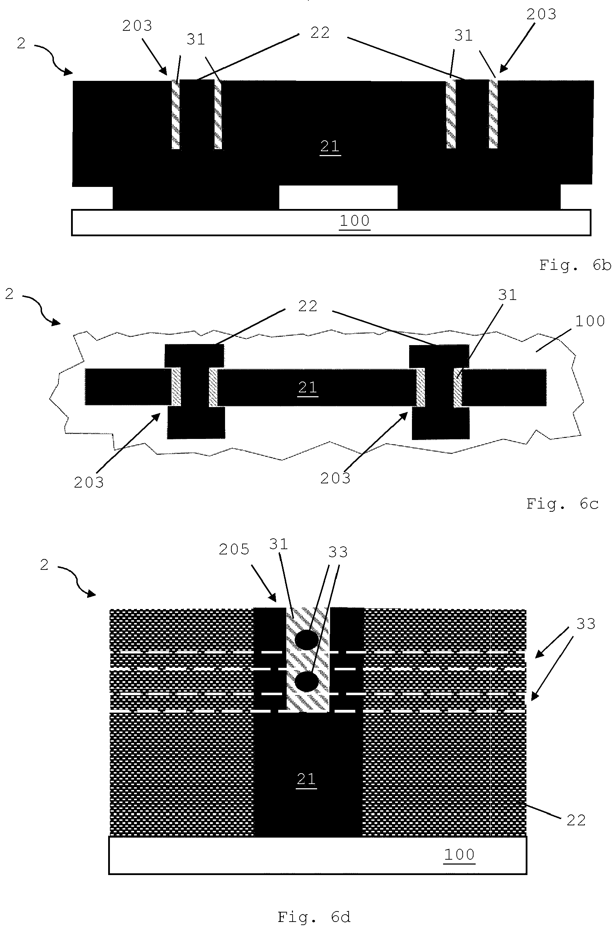

Fig. 6b zeigt eine schematische Seitenansicht eines Deckenelements 2, wohingegen Fig. 6c eine schematische Draufsicht auf dieses Betondeckenelement 2 zeigt. Zu sehen ist ein längslaufender FRC-Steg 21, welcher auf einer FRC-Platte 100 angeordnet ist. Ebenfalls zu sehen sind zwei querlaufende FRC-Stege 22. Um ein Aufstecken der querlaufenden FRC-Stege 22 auf den längslaufenden FRC-Steg 21 zu ermöglichen, weist dieser an den Schnittstellen eine nach oben geöffnete Nut 203 auf. Die Nuten 203 sind breiter ausgebildet als die querlaufenden FRC-Stege 22 breit sind. Entsprechend entsteht ein Hohlraum links und rechts von den querlaufenden FRC-Stege 22 an den Schnittstellen, welcher Hohlraum mit einem Füllmittel 31, wie z.B. Mörtel, mindestens teilweise ausgefüllt wird, um eine Verbindung zwischen längslaufenden und querlaufenden Stegen 21,22 herzustellen, welche Zugkräfte aufnehmen kann.

Fig. 6d einen schematischen Schnitt durch ein Betondeckenelement 2. Genauer gesagt handelt es sich um einen Querschnitt, welcher durch einen in eine erste Richtung ausgerichteten FRC-Steg, hier einen längslaufenden FRC-Steg 21, geht. Ebenfalls zu sehen ist ein Schnitt durch einen der quer zu diesem längslaufenden FRC-Steg 21 laufenden FRC-Steg 22, welcher durch den längslaufenden FRC-Steg 21 wie zweigeteilt wirkt. Die FRC-Stege 21,22 sind angeordnet auf einer FRC-Platte 100. Der längslaufende FRC-Steg 21 weist eine Kavität 205 auf, in welche zwei Armierungen 33 in Form von Armierungsstäben eingefügt und mit einem Füllmittel 31 vergossen sind. Eine derartige Ausführung ermöglicht das Aufnehmen hoher Zugkräfte. Optional können derartige Armierungen 33, wie hier gestrichelt angedeutet, auch kreuzweise verlaufen. Sprich nicht nur der querlaufende FRC-Steg 21 sondern auch der längslaufende FRC-Steg 22 weist eine Kavität (in dieser Darstellung nicht zu erkennen) auf, in welcher sich bspw. zwei in ein Füllmittel gebettete Armierungsstäbe (gestrichelt angedeutet) befinden. Damit sich längslaufende und querlaufende Armierungen nicht behindern, werden diese bevorzugt in verschiedenen Ebenen angeordnet.

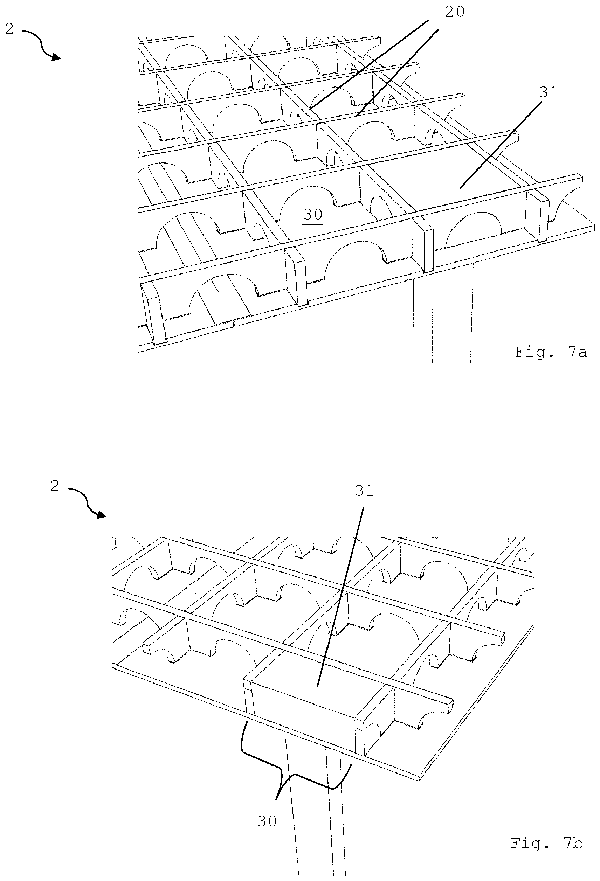

Fig. 7a zeigt eine perspektivische Draufsicht auf eine Ausführungsform eines erfindungsgemässen Betondeckenelements 2. Die FRC-Stege 20 sind derart zueinander angeordnet, dass sie eine Art Kassettenstruktur bilden, welche einzelne durch die FRC-Stege 20 begrenzte Räume 30 aufweist. Um den Bau weiterer Stockwerke zu ermöglichen, kann die auf dem gezeigten Betondeckenelement 2 auszubildende Betondecke verstärkt werden, indem z.B. einzelne dieser Räume 30 mit einem Bindemittel 31, wie Beton, ausgegossen werden und so punktuelle Verstärkungen bilden.

Die Fig. 7b zeigt eine perspektivische Draufsicht auf eine Ausführungsform eines erfindungsgemässen Betondeckenelements 2 vergleichbar zu der in Fig. 7a gezeigten. Die punktuelle Verstärkung durch das Ausfüllen eines Raumes 30 mit Beton 31 ist hier jedoch geschnitten.

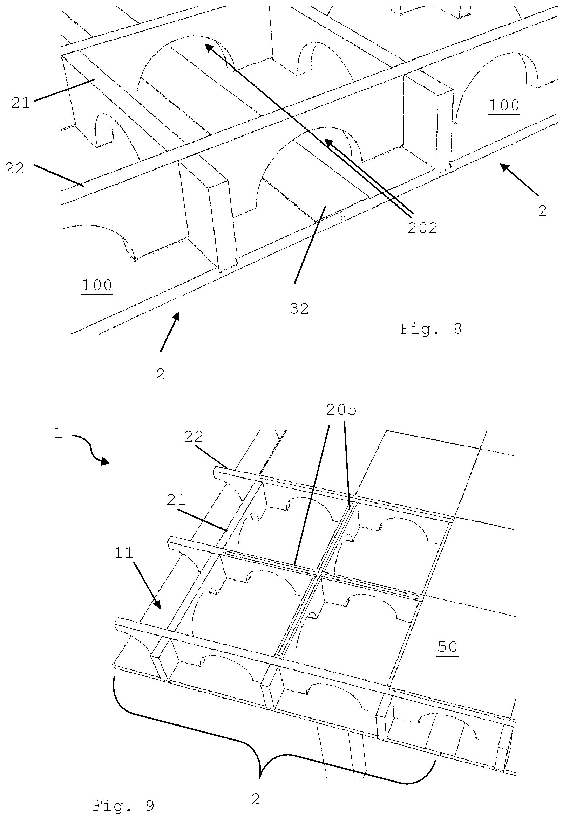

Fig. 8 zeigt eine perspektivische Draufsicht auf zwei miteinander verbundene erfindungsgemässe Betondeckenelemente 2, deren Verbindung sowohl mittels eines durch ein Bindemittel fixiertes Verbindungselements 32 als auch durch ein Aneinanderkleben der aufeinander ausgerichteten zueinander zeigenden Seiten der benachbarten FRC-Platten 100 zustande kommt. Die längslaufenden FRC-Stege 21 sind derart ausgerichtet, dass sie parallel zu der Kontaktfläche der aneinandergrenzenden Seiten der FRC-Platten 100 verlaufen, wohingegen die querlaufenden FRC-Stege 22 derart ausgerichtet sind, dass die Kontaktfläche der aneinandergrenzenden Seiten der FRC-Platten 100 von einem der Aussparungen 202 überspannt wird. Entsprechend ist das Verbindungselement 32 durch die eine Reihe bildenden deckungsgleichen bogenförmigen Aussparungen 202 der querlaufenden FRC-Stege 22 verlegt.

Fig. 9 zeigt eine perspektivische Draufsicht auf eine teilweise mit einer Deckschicht 50 versehene erfindungsgemässe Betondecke 1. Von der Oberfläche 11 der Grundstruktur des sichtbaren Betondeckenelements 2 her sind längslaufende FRC-Stege 21 und querlaufende FRC-Stege 22 angeordnet, welche teilweise eine Kavität 205 in Form eines Schlitzes aufweisen. Die Kavitäten 205 sind nach oben hin offen, sprich deren Öffnung zeigt weg von der Oberseite 11, sodass von oben her Zugelemente (z.B. Armierungseisen, FRCK-Stangen oder dergleichen) eingelegt und mit einem Bindemittel, wie z.B. Mörtel, vergossen werden können, um so eine zusätzliche Bewehrung bereitzustellen. Die hier gezeigten Kavitäten 205 sind (noch) nicht mit Zugelement und Mörtel ausgefüllt. Auf die durch die FRC-Stege 21,22 gebildete Ebene kann eine Deckschickt 50 aufgebracht werden, indem bspw. Parkettbretter auf den FRC-Stegen 21,22 abgestützt werden.

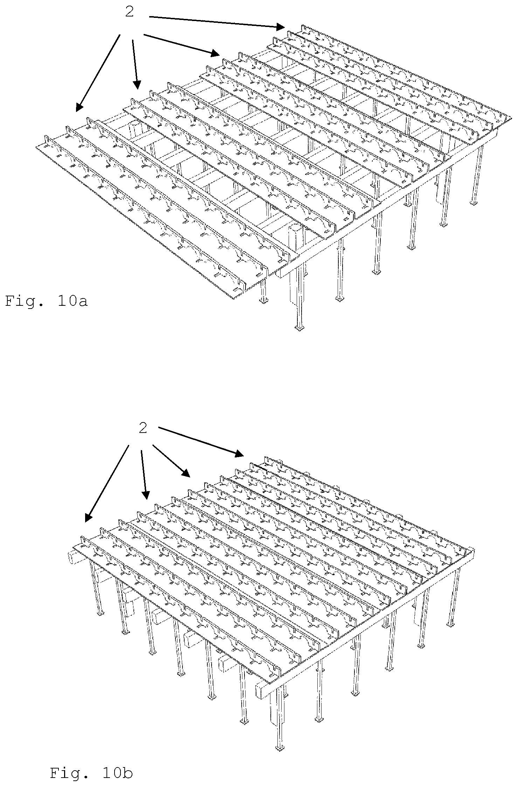

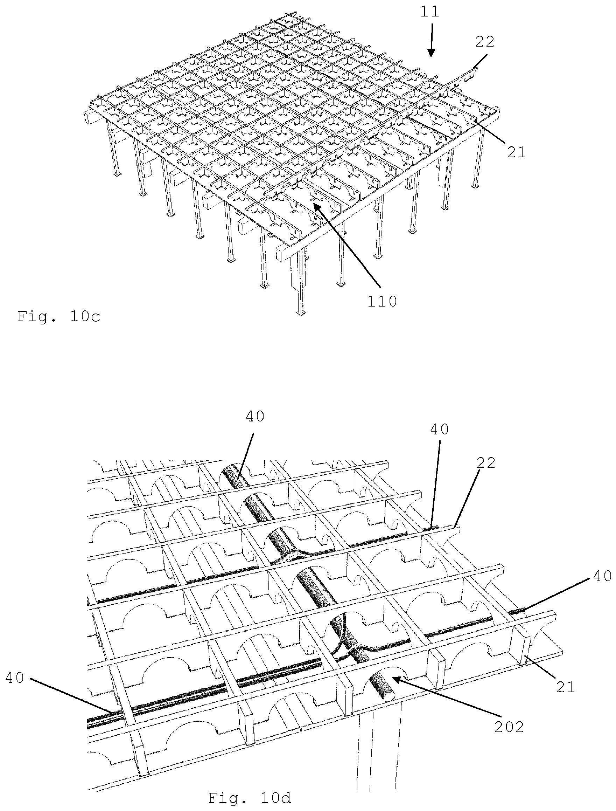

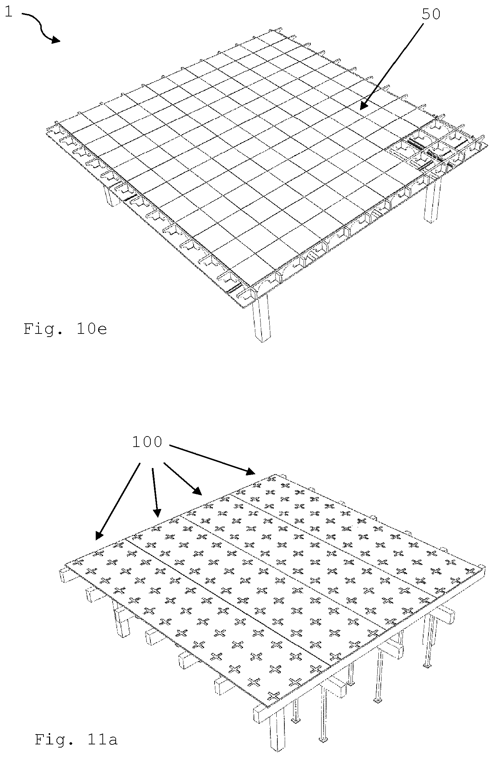

Ein erfindungsgemässes Verfahren zum Herstellen einer Betondecke 1 ist anhand der in den Figuren 10a bis 10e gezeigten perspektivischen Draufsichten illustriert. In einem ersten in Fig. 10a gezeigten Schritt werden mehrere Betondeckenelemente 2 (hier vier an der Zahl) auf einem Gerüst, bspw. durch Holzstreben und Deckenstützen gebildet, bereitgestellt. Diese Betondeckenelemente 2 werden dann in einem zweiten Schritt, wie in Fig. 10b ersichtlich, aufeinander ausgerichtet, und zwar derart, dass sie eine grosse Fläche bilden (hier ein grosses Rechteck) und zu allen Raumrichtungen hin bündig zueinander angeordnet sind. Zum Fixieren der relativen Position der einzelnen Betondeckenelemente 2 zueinander werden diese anschliessend mindestens teilweise miteinander verklebt (nicht gezeigt). Da die bereitgestellten Betondeckenelemente 2 lediglich mit längslaufenden FRC-Stegen 21 versehen waren, werden in einem weiteren Schritt, wie in Fig. 10c gezeigt, querlaufende FRC-Stege 22 auf der Oberseite 11 angeordnet, um eine Verstärkung zu erreichen. Die querlaufenden FRC-Stege 22 werden beispielsweise auf die bereits vorhandenen längslaufenden Stege 21 aufgesteckt, z.B. mittels in den längslaufenden FRC-Stegen 21 und querlaufenden FRC-Stegen 22 vorhandenen und aufeinander ausgerichteten Nuten. Um eine festere Verbindung als eine reine Steckverbindung zu erreichen, können an den Stützen der querlaufenden FRC-Stege 22 befindliche Fortsätze in sich auf der Oberseite 11 der Grundstruktur befindliche Ausnehmungen 110 eingelassen und darin mit einem Bindemittel, wie z.B. Mörtel, durch Verfüllung fixiert werden. Danach kann das Gerüst, wie in Fig. 10e ersichtlich, entfernt werden und die Decke liegt nur noch auf den definitiven Auflagerpunkten, hier Deckenstützen, auf. Dieser Schritt kann aber auch später ausgeführt werden, z.B. nachdem die Leitungen 40 verlegt oder sogar erst nachdem die Deckschicht 50 angeordnet ist. In dem darauffolgenden anhand von Fig. 10d illustrierten Schritt, welcher jedoch auch vor dem Schritt des Anbringens der querlaufenden FRC-Stege 22 ausgeführt werden kann, werden diverse Leitungen 40 verlegt. Diese Leitungen 40 werden angeordnet auf der Oberseite 11 der Grundstruktur 11 und durch die Aussparungen 202 der FRC-Stege 21,22 geführt. Ist zumindest ein Teil der Leitungen 40 verlegt, so kann mit dem Anbringen der Deckschicht 50 und somit dem Abschluss der Herstellung der Betondecke 1 begonnen werden.

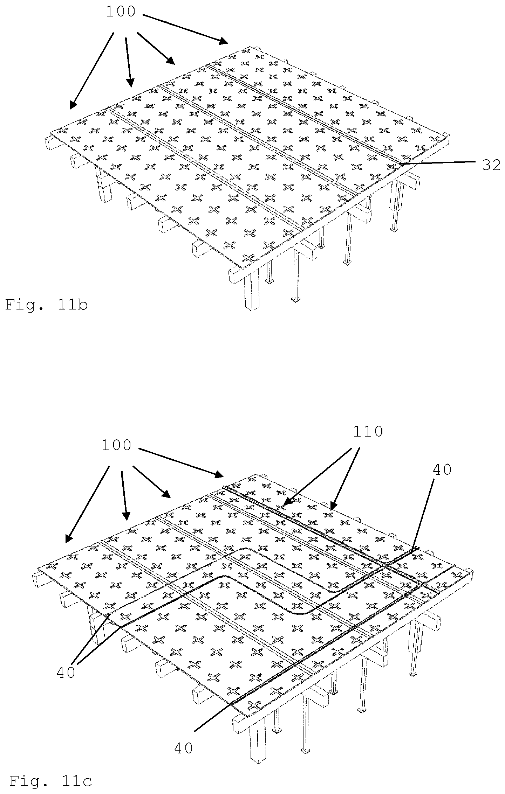

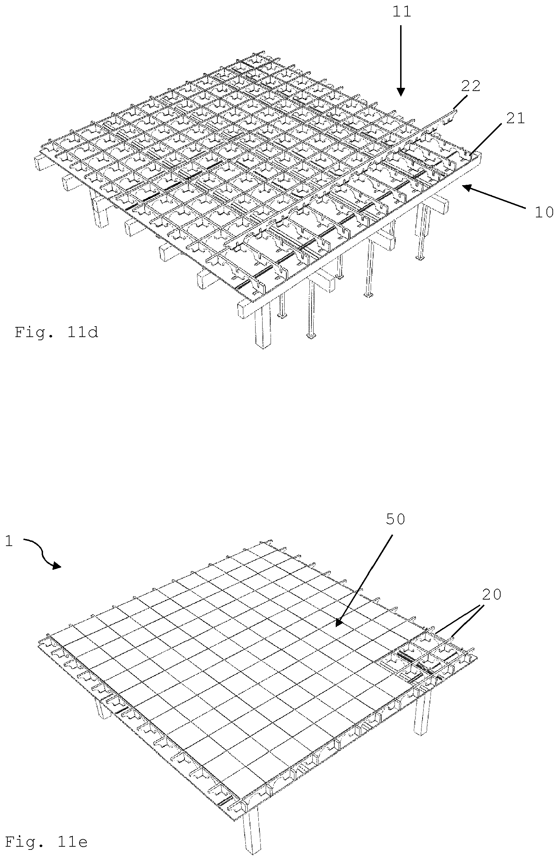

Ein weiteres erfindungsgemässes Verfahren zum Herstellen einer Betondecke 1 ist anhand der in den Figuren 11a bis 11e gezeigten perspektivischen Draufsichten illustriert. In einem ersten Schritt wird mindestens eine FRC-Platte 100 bereitgestellt. Werden mehrere FRC-Platten 100 (hier sind es vier an der Zahl, wie in Fig. 11a gezeigt) bereitgestellt, so erfolgt eine Ausrichtung dieser FRC-Platten 100 bündig zueinander derart, dass eine grosse (meist rechteckige) Fläche entsteht. Um die einzelnen FRC-Platten 100 miteinander zu verbinden, werden diese entlang der Kontaktflächen benachbarter FRC-Platten 100 verklebt, wie in Fig. 11b dargestellt. Hierfür kann einerseits ein Bindemittel direkt auf die Kontaktflächen aufgebracht werden und andererseits alternativ oder zusätzlich ein Verbindungselement 32, wie eine Lamelle, auf die Oberseite 11 entlang der Kontaktflächen benachbarter FRC-Platten 100 geklebt werden. Im darauffolgenden in Fig. 11c gezeigten Schritt werden Leitungen 40 verlegt. Erfolgt dieser Schritt vor dem Anordnen der FRC-Stege, so sollten die Leitungen 40 derart verlegt werden, dass sie nicht mit den Stellen kollidieren, die zur Befestigung der später anzuordnenden FRC-Stege 20 vorgesehen sind. Solche Stellen können bspw. Ausnehmungen 110 zum Aufnehmen der Stützen der FRC-Stege 20 sein. In der gezeigten Ausführung sind diese regelmässig über die einzelnen FRC-Platten 100 verteilt und sind in der Draufsicht kreuzförmig ausgebildet. Der in Fig. 11d gezeigte Schritt, welcher alternativ auch vor dem Verlegen der Leitungen 40 ausgeführt werden kann, umfasst das Anbringen von FRC-Stegen 20 auf der Oberseite 11 der u.a. durch die FRC-Platten 100 gebildeten Grundstruktur 10. Beispielsweise werden zuerst FRC-Stege einer Ausrichtung (z.B. längslaufende FRC-Stege 21) angebracht und anschliessend FRC-Stege einer anderen Ausrichtung (z.B. querlaufende FRC-Stege 22). Neben bekannten Befestigungsarten, wie z.B. Verschrauben, können die FRC-Stege 20 insbesondere durch die bereits beschriebene (siehe Fig. 3a und 3b) Steck-Pass-Verbindung angebracht werden. Gut zu sehen ist, dass die kreuzförmige Anordnung der FRC-Stege 21,22 der Grundstruktur 10 ausreichend Stabilität verleihen, dass zum Tragen der Grundstruktur 10 lediglich noch vier Träger bzw. Auflager, einer pro Ecke, benötigt werden. Die Grundstruktur 10 wäre jedoch auch ausreichend stabil, um nur auf drei Auflagern in Form von drei Trägern zu stehen. Die restlichen Dachstützen können entfernt werden (siehe Fig. 11e, in welcher das Gerüst nicht mehr vorhanden ist). Um sich kreuzende FRC-Stege 21,22 vernünftig anbringen zu können, weisen diese bevorzugt zusammenwirkende Mittel auf, welche ein Ineinanderrespektive Aufeinander-Stecken ermöglichen. Derartige Mittel können generell komplementäre Formen sein, wie z.B. aufeinander ausgerichtete Nuten oder komplementäre Vorsprünge und Ausnehmungen. In einem letzten in Fig. 11e dargestellten Schritt wird dann eine Deckschicht 50 auf den FRC-Stegen 20 abgestützt, um die Herstellung der Betondecke 1 abzuschliessen.

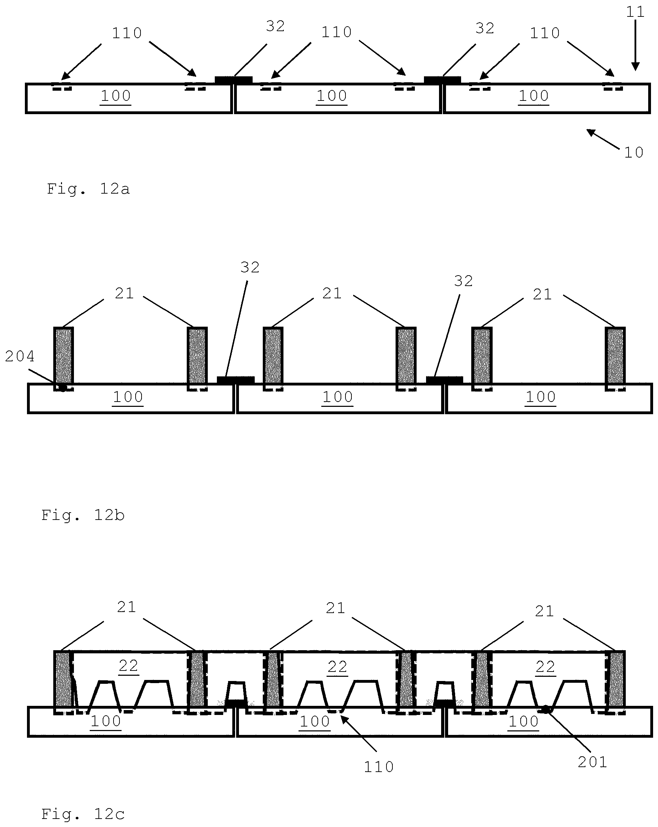

Anhand der Figuren 12a bis 12c sind Teilschritte einer Ausführungsform eines erfindungsgemässen Verfahrens zum Herstellen einer Betondecke, und dadurch auch der Aufbau eines erfindungsgemässen Betondeckenelements 2, illustriert. Fig. 12a zeigt eine Grundstruktur 10 mit Oberseite 11, welche sich zusammensetzt aus drei nebeneinander angeordneten FRC-Platten 100. Die FRC-Platten 100 sind miteinander verbunden über auf der Oberseite 11 angebrachte Verbindungselemente 32. Die FRC-Platten 100 weisen Ausnehmungen 110 für die Aufnahme von Stützen bzw. den Fortsatz resp. die Fortsätze der Stützen von FRC-Stegen auf. Da es sich um eine Seitenansicht handelt und die Ausnehmungen 110 dieser Ausführungsform sich nicht durch die gesamte Länge der FRC-Platten 100 erstrecken (was in anderen Ausführungsformen durchaus der Fall sein kann), sind diese nur gestrichelt dargestellt, um ihre Versetzung in die Bildebene hinein zu verdeutlichen. Nachdem Verbinden der einzelnen FRC-Platten 110 miteinander werden je zwei längslaufende FRC-Stege 21 pro FRC-Platte 100 bevorzugt mittels Steck-Pass-Verbindung unter Zuhilfenahme der angedeuteten Ausnehmungen 110 und den Fortsätzen 201 der Stützen der FRC-Stege 21 angeordnet. Der Übersichtlichkeit halber ist lediglich ein Fortsatz 204 mit Bezugszeichen versehen. Die Fortsätze 201 sind ebenfalls gestrichelt gezeichnet, da sie in die Bildebene hineinversetzt sind. Um nun die querlaufenden FRC-Stege 22 anzuordnen, können diese in einzelnen Fragmenten zwischen die bereits vorhandenen längslaufenden FRC-Stege 21 gesteckt werden. Halt wird den Fragmenten bspw. gegeben, indem sie mit den angrenzenden längslaufenden FRC-Stegen 21 verklebt werden, bspw. mithilfe eines Füllmittels oder Bindemittels, wie Mörtel oder dergleichen. Die Fragmente können jedoch z.B. auch endständig, also in Richtung der angrenzenden längslaufenden FRC-Stege 21 zeigend, konisch ausgebildet sein und so regelrecht zwischen den längslaufenden FRC-Stegen 21 verklemmt werden. Die konische Form ist bspw. im querlaufenden FRC-Steg 22 links im Bild dargestellt. Hier bleibt im unteren Bereich nahe der Oberseite 11 ein Spalt bestehen, welcher zwar mit einem Füllmittel gefüllt werden könnte, aber genauso gut auch freibleiben kann. Weiter werden die Fragmente der querlaufenden FRC-Stege 22 über deren Stützen bzw. die Fortsätze 201 dieser Stützen bevorzugt mittels Steck-Pass-Verbindungen an den FRC-Platten 100 angeordnet. Der Übersichtlichkeit halber ist lediglich ein Fortsatz 204 mit Bezugszeichen versehen. Die Ausnehmungen 110, in welche diese eingebracht sind, sind in den Fig. 12a und 12b nicht dargestellt und in der Fig. 12c lediglich einmal mit einem Bezugszeichen versehen.

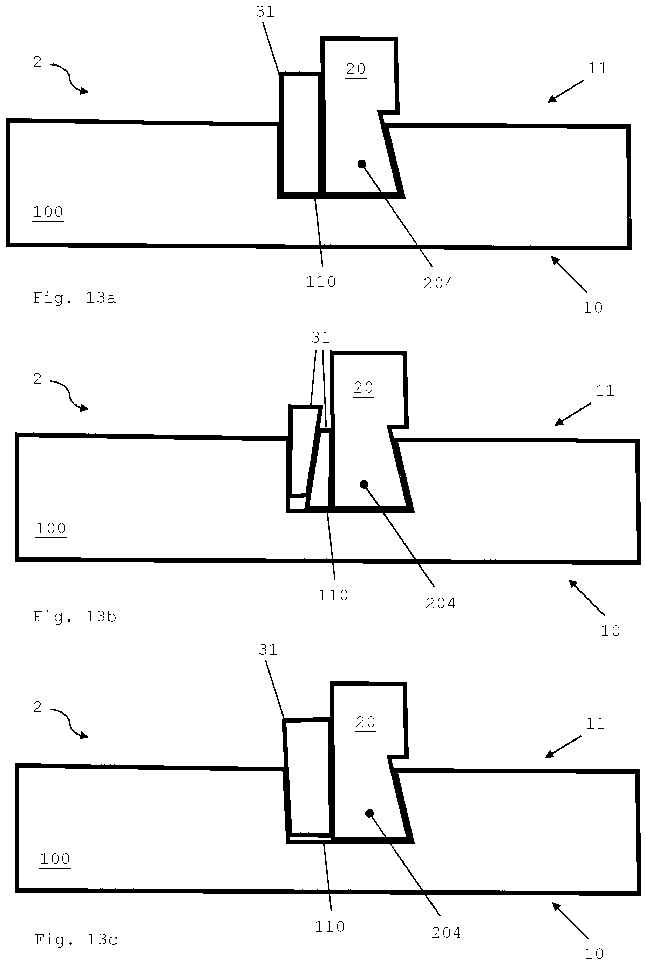

In den Fig. 13a bis 13c sind diverse Varianten der Steck-Pass-Verbindung anhand von Schnitten durch erfindungsgemässe Betondeckenelemente 2 dargestellt. Die Steck-Pass-Verbindung dient dazu, einen FRC-Steg 20 abschnittsweise mit der Grundstruktur 10 zu verbinden. Die Grundstruktur 10 weist eine Oberseite 11 auf und umfasst mindestens eine FRC-Platte 100. Die FRC-Platte 100 wiederum weist mindestens eine Ausnehmung 110 auf, welche in den hier gezeigten Beispielen im Querschnitt eine Keilform besitzt und zur Oberseite 11 hin offen ist. In die Ausnehmung 110 ragt der, ebenfalls im Querschnitt keilförmige, Fortsatz 204 einer Stütze des FRC-Elements 20 hinein. Die Ausnehmung 110 ist in ihrer Grösse so gewählt, dass der Fortsatz 204 von der Oberseite 11 her in sie eingebracht werden kann. Um nun eine kraftschlüssige Verbindung zu erhalten, wird der Fortsatz 204 in der Ausnehmung 110 fixiert, und zwar mithilfe eines Füllmittels 31. Neben Mitteln wie Mörtel, Sand, etc. können z.B. auch ein einfaches im Querschnitt rechteckiges Plättchen (siehe Fig. 13a), ein Keil (siehe Fig. 13c) oder zwei bevorzugt gegenläufig ausgerichtete Keile (siehe Fig. 13b) verwendet werde, um den Fortsatz 204 in der Ausnehmung 110 zu verklemmen und den FRC-Steg 20 so mit der Grundstruktur 10 zu verbinden.

### Bezugszeichenliste

| | |
|---|---|
| 0 | Betondecke bekannt |
| 1 | Betondecke |
| 2 | Betondeckenelement |
| 10 | Grundstruktur |
| 11 | Oberseite |
| 20 | FRC-Steg |
| 201 | Stütze FRC-Steg |
| 202 | Aussparung FRC-Steg |
| 203 | Nut FRC-Steg |
| 204 | Fortsatz der Stütze FRC-Steg |
| 205 | Kavität |
| 21 | Längslaufender FRC-Steg |
| 22 | Querlaufender FRC-Steg |
| 25 | Bereich breiter Anordnung |
| 26 | Bereich enger Anordnung |
| 30 | Raum |
| 31 | Füllmittel |
| 32 | Verbindungselement |
| 33 | Armierung |
| 40 | Leitung |
| 50 | Deckschicht |
| 100 | FRC-Platte |
| 110 | Ausnehmung |

## Patentansprüche

1. Betondeckenelement (2) umfassend:
- eine flächige Grundstruktur (10) mit einer Oberseite (11) und umfassend mindestens eine FRC-Platte (100); und
- mindestens einen FRC-Steg (20),
wobei der mindestens eine FRC-Steg (20) auf der Oberseite (11) angeordnet und abschnittsweise mit der Grundstruktur (10) verbunden ist, wobei der mindestens eine FRC-Steg (20) mindestens zwei Stützen (201) aufweist, welche die abschnittsweise Verbindung mit der Grundstruktur (10) bereitstellen, und wobei:
- mindestens eine Stütze (201) endständig und der Oberseite (11) zugewandt mindestens einen Fortsatz (204) aufweist, welcher Fortsatz (204) angeordnet ist in einer Ausnehmung (110) einer FRC-Platte (100) der Grundstruktur (10) und in dieser grösser als der Fortsatz (204) dimensionierten Ausnehmung (110) fixiert ist; und/oder
- mindestens eine FRC-Platte (100) der Grundstruktur (10) mindestens einen Fortsatz (204) auf der Oberseite (11) aufweist, welcher Fortsatz (204) angeordnet ist in einer endständig angeordnet und der Oberseite (11) zugewandten Ausnehmung (110) einer Stütze (201) und in dieser grösser als der Fortsatz (204) dimensionierten Ausnehmung (110) fixiert ist.

2. Betondeckenelement (2) nach Anspruch 1, wobei sich zwischen den mindestens zwei Stützen (201) eine Aussparung (202) befindet.

3. Betondeckenelement (2) nach einem der Ansprüche 1 bis 2 umfassend mindestens zwei FRC-Stege (20), wobei die FRC-Stege (20) parallel zueinander und/oder in einem Winkel kleiner 180° und grösser 0°, insbesondere orthogonal, zueinander angeordnet sind.

4. Betondeckenelement (2) nach Anspruch 3, wobei mindestens ein Teil der parallel zueinander angeordneten FRC-Stege (20) äquidistant zueinander angeordnet sind oder wobei ein Teil der parallel zueinander angeordneten FRC-Stege (20) derart nicht äquidistant zu einem anderen Teil der parallel zueinander angeordneten FRC-Stege (20) ist, dass mindestens ein Bereich höherer FRC-Steg-Dichte gebildet wird.

5. Betondeckenelement (2) nach einem der Ansprüche 1 bis 4 umfassend mindestens zwei FRC-Stege (20), wobei mindestens zwei der FRC-Stege (20) derart in einem Winkel kleiner 180 ° und grösser 0°, insbesondere orthogonal, zueinander angeordnet sind, dass die mindestens zwei FRC-Stege (20) sich an einem Schnittpunkt schneiden, und die mindestens zwei FRC-Stege (20) an dem Schnittpunkt gesteckt sind, wobei bevorzugt die mindestens zwei der FRC-Stege (20) am Schnittpunkt je eine gegenläufige Nut (203) aufweisen und insbesondere die Tiefe der Nuten (203) in Summe mindestens der Höhe der FRC-Stege (20) am Schnittpunkt entspricht.

6. Betondeckenelement (2) nach einem der Ansprüche 3 bis 5, wobei mindestens drei, insbesondere mindestens vier, der FRC-Stege (20) derart zueinander angeordnet sind, dass sie einen Raum (30) einschliessen, welcher Raum (30) mindestens teilweise mit Beton ausgegossen ist.

7. Betondeckenelement (2) nach einem der Ansprüche 1 bis 6, wobei mindestens einer der FRC-Stege (20) massiv ausgebildet ist und/oder mindestens einer der FRC-Stege (20) mindestens eine Kavität (205), insbesondere in Form eines Schlitzes, aufweist, wobei die mindestens eine Kavität insbesondere mit einem Zugelement, weiter insbesondere mit einem Zugstab, versehen ist und insbesondere mit einem Füllmittel (31), bevorzugt mit Mörtel, mindestens teilweise ausgegossen ist.

8. Betondeckenelement (2) nach einem der Ansprüche 1 bis 7, wobei die Grundstruktur (10) mindestens zwei flächig nebeneinander angeordnete und zueinander benachbarte FRC-Platten (100) umfasst, wobei insbesondere die FRC-Platten (100) mindestens teilweise entlang ihrer aufeinander ausgerichteten Seiten verklebt sind.

9. Betondeckenelement (2) nach Anspruch 8, wobei mindestens ein Verbindungselement (32), insbesondere ein Verbindungspatch, mindestens teilweise auf der Oberseite (11) entlang der aufeinander ausgerichteten Seiten der flächig nebeneinander angeordneten und zueinander benachbarten FRC-Platten (100) angebracht ist.

10. Betondeckenelement (2) nach einem der Ansprüche 1 bis 9, wobei der mindestens eine Fortsatz (204) und die Ausnehmung (110) im Querschnitt die Form eines Keils aufweisen, insbesondere eines Keils mit einer oder mit zwei schiefen Ebenen, oder wobei sowohl der Fortsatz (204) als auch die Ausnehmung (110) im Querschnitt die Form eines Keils mit nur einer schiefen Ebene aufweisen.

11. Betondeckenelement (2) nach einem der Ansprüche 1 bis 10, wobei die Dimension der Ausnehmung (110) und die Dimension des Fortsatzes (204) derart aufeinander abgestimmt sind, dass der Fortsatz (204) in Querrichtung fügbar ist, insbesondere indem die Ausnehmung (110) an ihrer engsten Stelle grösser ausgebildet ist als der Fortsatz (204) an seiner breitesten Stelle.

12. Betondecke (1) umfassend mindestens ein Betondeckenelement (2) nach einem der Ansprüche 1 bis 11.

13. Betondecke (1) nach Anspruch 12, umfassend mindestens eine Leitung (40), welche auf der Oberseite (11) der Grundstruktur (10) angeordnet und durch mindestens eine Aussparung (202) eines FRC-Stegs (20) geführt ist, und/oder umfassend eine auf den FRC-Stegen (20) abgestützte Deckschicht (50), insbesondere eine Deckschicht (50) umfassend Bodenplatten aus Holz und/oder Stein und/oder FRC-Beton.

14. Verwendung einer Steck-Pass-Verbindung zum Verbinden zweier FRC-Betonelemente (100, 20), wobei die Steck-Pass-Verbindung aus einem in eine Ausnehmung eines FRC-Betonelements gesteckten Fortsatzes eines FRC-Betonelements und einem Füllmittel besteht, wobei die Ausnehmung grösser dimensioniert ist als der Fortsatz, und wobei der Fortsatz in die Ausnehmung mit dem Füllmittel eingepasst wird, sodass der Formschluss der Steck-Pass-Verbindung erst durch das Füllmittel entsteht.

15. Verfahren zum Herstellen einer Betondecke (1), umfassend die Schritte:
- Bereitstellen mindestens eines Betondeckenelements (2) nach einem der Ansprüche 1 bis 11; und
- Anordnen mindestens einer Leitung (40) auf der Oberseite (11) der Grundstruktur (10) und Führen dieser Leitung (40) durch mindestens eine Aussparung (202) eines FRC-Stegs (20); und/oder
- Abstützen einer Deckschicht (50) auf den FRC-Stegen (20) .

16. Verfahren zum Herstellen einer Betondecke (1) nach Anspruch 15, umfassend:
- Bereitstellen mindestens zweier Betondeckenelemente (2) nach einem der Ansprüche 1 bis 11; und
- Anordnen der mindestens zwei Betondeckenelementen (2) flächig nebeneinander; insbesondere anschliessend
- Verkleben der mindestens zwei Betondeckenelemente (2) mindestens teilweise entlang ihrer aufeinander ausgerichteten Seiten; und/oder insbesondere
- Anbringen mindestens eines Verbindungselements (32) auf der Oberseite (11) mindestens teilweise entlang der aufeinander ausgerichteten Seiten der flächig nebeneinander angeordneten und zueinander benachbarten Betondeckenelemente (2).

17. Verfahren zum Herstellen einer Betondecke (1), umfassend:
- Bereitstellen mindestens einer FRC-Platte (100) zum Bilden einer Grundstruktur (10), wobei die FRC-Platte (100) mindestens eine Ausnehmung (110), welche insbesondere einen keilförmigen Querschnitt aufweist,
oder mindestens einen Fortsatz (204) auf der Oberseite (11), welcher Fortsatz insbesondere im Querschnitt keilförmig ist, aufweist;
- insbesondere Anordnen von mindestens einer Leitung (40) auf der Oberseite (11) der Grundstruktur (10), bevorzugt derart, dass die mindestens eine Ausnehmung (110) bzw. der mindestens eine Fortsatz (204) frei bleibt;
- Anordnen von mindestens einem FRC-Steg (20) mit mindestens zwei Stützen auf der Oberseite (11) der Grundstruktur (10) durch Einbringen eines Fortsatzes (204) der Stützen (201) des FRC-Stegs (20) in die mindestens eine Ausnehmung (110) der FRC-Platte (100) und Fixieren des Fortsatzes (204) in der Ausnehmung (110) mithilfe eines Füllmittels (31), wobei der Fortsatz insbesondere im Querschnitt keilförmig ist, oder
Anordnen von mindestens einem FRC-Steg (20) mit mindestens zwei Stützen auf der Oberseite (11) der Grundstruktur (10) durch Einbringen des Fortsatzes (204) der Oberseite (11) der FRC-Platte (100) in eine Ausnehmung (110) der Stützen (201) des FRC-Steges (20) und Fixieren des Fortsatzes (204) in der Ausnehmung (110) mithilfe eines Füllmittels (31);
- Abstützen einer Deckschicht (50) auf dem FRC-Steg (20) .

18. Verfahren zum Herstellen einer Betondecke (1) nach Anspruch 17, umfassend:
- Anordnen von mindestens einem weiteren FRC-Steg (20) auf der Oberseite (11) der Grundstruktur (10), insbesondere in einem Winkel von kleiner 180° und grösser 0° zu dem bereits angeordneten mindestens einen FRC-Steg (20) und/oder insbesondere umfassend Stecken des mindestens einen zusätzlichen FRC-Stegs (20) auf mindestens einen bereits angeordneten FRC-Steg (20).

19. Verfahren zum Herstellen einer Betondecke (1) nach Anspruch 17 oder Anspruch 18, umfassend:
- Bereitstellen mindestens zweier FRC-Platten (100) zum Bilden einer Grundstruktur (10), insbesondere zweier FRC-Platten (100) aufweisend im Querschnitt keilförmige Ausnehmungen (110);
- Anordnen der mindestens zwei FRC-Platten (100) flächig nebeneinander;
- insbesondere Verkleben der mindestens zwei FRC-Platten (100) mindestens teilweise entlang ihrer aufeinander ausgerichteten Seiten; und/oder
- insbesondere Anbringen mindestens eines Verbindungselements (32) auf der Oberseite (11) mindestens teilweise entlang der aufeinander ausgerichteten Seiten der flächig nebeneinander angeordneten und zueinander benachbarten FRC-Platten (100).

20. Verfahren zum Herstellen eines Betondeckenelements (2) nach einem der Ansprüche 1 bis 11, umfassend:
- Bereitstellen mindestens einer FRC-Platte (100) zum Bilden einer Grundstruktur (10), insbesondere einer FRC-Platte (100) mit im Querschnitt keilförmigen Ausnehmungen (110) ;
- Anordnen von mindestens einem FRC-Steg (20) auf der Oberseite (11) der Grundstruktur (10) durch Einbringen eines Fortsatzes (204) der Stützen (201) der FRC-Stege (20) in je eine Ausnehmung (110) und insbesondere Fixieren des Fortsatzes (204) in der Ausnehmung (110) mithilfe eines Füllmittels oder
durch Einbringen eines Fortsatzes (204) der FRC-Platte (100) in je eine Ausnehmung (110) der Stützen (201) der FRC-Stege (20) und insbesondere Fixieren des Fortsatzes (204) in der Ausnehmung (110) mithilfe eines Füllmittels;
- insbesondere Anordnen von mindestens einem weiteren FRC-Steg (20) auf der Oberseite (11) der Grundstruktur (10), bevorzugt in einem Winkel von kleiner 180° und grösser 0° zu dem bereits angeordneten mindestens einen FRC-Steg (20) und/oder bevorzugt umfassend Stecken des mindestens einen zusätzlichen FRC-Stegs (20) auf den mindestens einen bereits angeordneten FRC-Steg (20).

## Claims

1. Concrete ceiling element (2) comprising:
- a flat basic structure (10) with an upper side (11) and comprising at least one FRC plate (100); and
- at least one FRC ridge (20),
wherein the at least one FRC ridge (20) is arranged on the upper side (11) and connected in sections to the basic structure (10), wherein the at least one FRC ridge (20) has at least two supports (201) which provide the connection to the basic structure (10) in sections, and wherein:
- at least one support (201) at the end and facing the upper side (11) has at least one extension (204), which extension (204) is arranged in a recess (110) of an FRC plate (100) of the basic structure (10) and is fixed in this recess (110) which is dimensioned larger than the extension (204); and/or
- at least one FRC plate (100) of the basic structure (10) has at least one extension (204) on the upper side (11), which extension (204) is arranged in a recess (110) at the end and facing the upper side (11) of a support (201) and is fixed in this extension (204) which is dimensioned larger than the recess (110).

2. Concrete ceiling element (2) according to claim 1, wherein a recess (202) is located between the at least two supports (201).

3. Concrete ceiling element (2) according to one of claims 1 to 2, comprising at least two FRC ridges (20), the FRC ridges (20) being arranged parallel to one another and/or at an angle of less than 180° and greater than 0°, in particular orthogonally, to one another.

4. Concrete ceiling element (2) according to claim 3, wherein at least some of the FRC ridges (20) arranged parallel to one another are arranged equidistant from one another, or wherein some of the FRC ridges (20) arranged parallel to one another are not equidistant from another part of the FRC ridges (20) arranged parallel to one another in such a way that at least one area of higher FRC ridge density is formed.

5. Concrete ceiling element (2) according to one of claims 1 to 4, comprising at least two FRC ridges (20), wherein at least two of the FRC ridges (20) are arranged at an angle of less than 180° and greater than 0°, in particular orthogonally, to one another, that the at least two FRC ridges (20) intersect at a point of intersection, and the at least two FRC ridges (20) are plugged in at the point of intersection, wherein preferably the at least two of the FRC ridges (20) each have an opposing groove (203) at the point of intersection and in particular the depth of the grooves (203) in total corresponds to at least the height of the FRC ridges (20) at the point of intersection.

6. Concrete ceiling element (2) according to one of claims 3 to 5, wherein at least three, in particular at least four, of the FRC ridges (20) are arranged to one another in such a way that they enclose a space (30), which space (30) is at least partially poured out with concrete.

7. Concrete ceiling element (2) according to one of claims 1 to 6, wherein at least one of the FRC ridges (20) is solidly formed and/or at least one of the FRC ridges (20) has at least one cavity (205), in particular in the form of a slot, wherein the at least one cavity is in particular provided with a tension element, more particularly with a tension rod, and in particular is at least partially filled with a filling material (31), preferably with mortar.

8. Concrete ceiling element (2) according to one of claims 1 to 7, wherein the basic structure (10) comprises at least two FRC plates (100) which are arranged planar next to one another and are adjacent to one another, wherein in particular the FRC plates (100) are at least partially glued along their mutually aligned sides.

9. Concrete ceiling element (2) according to claim 8, wherein at least one connecting element (32), in particular a connecting patch, is at least partially mounted on the upper side (11) along the mutually aligned sides of the FRC plates (100).

10. Concrete ceiling element (2) according to one of claims 1 to 9, wherein the at least one extension (204) and the recess (110) have the shape of a wedge in cross-section, in particular of a wedge with one or with two inclined planes, or wherein both the extension (204) as well as the recess (110) have the shape of a wedge with only one inclined plane in cross-section.

11. Concrete ceiling element (2) according to one of claims 1 to 10, wherein the dimension of the recess (110) and the dimension of the extension (204) are coordinated in such a way that the extension (204) can be joined in the transverse direction, in particular in that the recess (110) is made larger at its narrowest point than the extension (204) at its widest point.

12. Concrete ceiling (1) comprising at least one concrete ceiling element (2) according to one of claims 1 to 11.

13. Concrete ceiling (1) according to claim 12, comprising at least one line (40) which is arranged on the upper side (11) of the basic structure (10) and is guided through at least one recess (202) of an FRC ridge (20), and/or comprising a cover layer (50) supported on the FRC ridges (20), in particular a cover layer (50) comprising floor slabs made of wood and/or stone and/or FRC concrete.

14. Use of a push-fit connection to connect two FRC concrete elements (100, 20), wherein the push-fit connection consists of an extension of an FRC concrete element inserted into a recess of the FRC concrete element and a filling material, the recess being dimensioned larger than the extension, and wherein the extension is fitted into the recess with the filling material, so that the form-fitting of the push-fit connection is created by the filling material.

15. Method for producing a concrete ceiling (1), comprising the steps:
- providing at least one concrete ceiling element (2) according to one of claims 1 to 11; and
- arranging at least one line (40) on the upper side (11) of the basic structure (10) and guiding this line (40) through at least one recess (202) of an FRC ridge (20); and/or
- supporting a cover layer (50) on the FRC ridges (20).

16. Method for producing a concrete ceiling (1) according to claim 15, comprising:
- providing at least two concrete ceiling elements (2) according to one of claims 1 to 11; and
- arranging the at least two concrete ceiling elements (2) flat next to one another; in particular subsequently
- gluing the at least two concrete ceiling elements (2) at least partially along their mutually aligned sides; and/or in particular
- attaching at least one connecting element (32) on the upper side (11) at least partially along the mutually aligned sides of the concrete ceiling elements (2) arranged planar next to one another and adjacent to one another.

17. Method for producing a concrete ceiling (1), comprising:
- providing at least one FRC plate (100) for forming a basic structure (10), wherein the FRC plate (100) has at least one recess (110) which in particular has a wedge-shaped cross-section or has at least one extension (204) on the upper side (11), the extension in particular having a wedge-shaped cross-section;
- in particular, arranging at least one line (40) on the upper side (11) of the basic structure (10), preferably in such a way that the at least one recess (110) or the at least one extension (204) remains free;
- arranging at least one FRC ridge (20) with at least two supports on the upper side (11) of the basic structure (10) by introducing an extension (204) of the supports (201) of the FRC ridge (20) into the at least one recess (110) of the FRC plate (100) and fixing the extension (204) in the recess (110) with the aid of a filling material (31), wherein the extension has a wedge-shaped cross-section, or
- arranging at least one FRC ridge (20) with at least two supports on the upper side (11) of the basic structure (10) by introducing the extension (204) of the upper side (11) of the FRC plate (100) into the recess (110) of the supports (201) of the FRC ridge (20) and fixing the extension (204) in the recess (110) with the aid of a filling material (31);
- supporting a cover layer (50) on the FRC ridge (20).

18. Method for producing a concrete ceiling (1) according to claim 17, comprising:
- arranging at least one further FRC ridge (20) on the upper side (11) of the basic structure (10), in particular at an angle of less than 180° and greater than 0° to the already arranged at least one FRC ridge (20) and/or in particular comprising plugging the at least one additional FRC ridge (20) onto at least one already arranged FRC ridge (20) .

19. Method for producing a concrete ceiling (1) according to claim 17 or claim 18, comprising:
- providing at least two FRC plates (100) for forming a basic structure (10), in particular two FRC plates (100) having recesses (110) that are wedge-shaped in cross-section;
- arranging the at least two FRC plates (100) flat next to one another;
- in particular gluing the at least two FRC plates (100) at least partially along their mutually aligned sides; and/or
- in particular, attaching at least one connecting element (32) on the upper side (11) at least partially along the mutually aligned sides of the FRC plates (100) which are arranged next to one another and adjacent to one another.

20. Method for producing a concrete ceiling element (2) according to one of claims 1 to 11, comprising:
- providing at least one FRC plate (100) for forming a basic structure (10), in particular an FRC plate (100) with recesses (110) that are wedge-shaped in cross-section;
- arranging at least one FRC ridge (20) on the upper side (11) of the basic structure (10) by introducing an extension (204) of the supports (201) of the FRC ridges (20) into a recess (110) and in particular fixing the extension (204) in the recess (110) with the aid of a filling material or by introducing an extension (204) of the FRC plate (100) into a recess (110) of the supports (201) of the FRC ridges (20) and in particular fixing the extension (204) in the recess (110) with the aid of a filling material;
- in particular, arranging at least one further FRC ridge (20) on the upper side (11) of the basic structure (10), preferably at an angle of less than 180° and greater than 0° to the at least one FRC ridge (20) already arranged and/or preferably comprising plugging the at least one additional FRC ridge (20) onto the at least one already arranged FRC ridge (20).

## Revendications

1. Élément de plancher en béton (2) comprenant :
- une structure de base (10) plane avec une surface supérieure (11) et comprenant au moins une plaque de béton FRC (béton renforcé de fibres) (100) ; et
- au moins une entretoise de béton FRC (20),
dans lequel la au moins une entretoise de béton FRC (20) est disposée sur la surface supérieure (11) et est raccordée par endroits à la structure de base (10), dans lequel la au moins une entretoise de béton FRC (20) présente au moins deux supports (201) qui permettent la liaison par endroits avec la structure de base (10), et dans lequel :
- au moins un support (201) présente au moins un prolongement (204) orienté vers l'extrémité et la surface supérieure (11), lequel prolongement (204) est agencé dans un évidement (110) d'une plaque de béton FRC (100) de la structure de base (10) et est fixé dans cet évidement (110) dimensionné plus grand que le prolongement (204) ; et/ou
- au moins une plaque de béton FRC (100) de la structure de base (10) présente au moins un prolongement (204) sur la surface supérieure (11), lequel prolongement (204) est agencé dans un évidement (110) d'un support (201) orienté vers l'extrémité et la surface supérieure (11) et est fixé dans cet évidement (110) dimensionné plus grand que le prolongement (204).

2. Élément de plancher en béton (2) selon la revendication 1, dans lequel un évidement (202) est prévu entre les au moins deux supports (201).

3. Élément de plancher en béton (2) selon l'une des revendications 1 à 2 comprenant au moins deux entretoises de béton FRC (20), les entretoises de béton FRC (20) étant disposées parallèlement entre elles et/ou suivant un angle inférieur à 180° et supérieur à 0°, en particulier de façon perpendiculaire entre elles.

4. Élément de plancher en béton (2) selon la revendication 3, dans lequel au moins une partie des entretoises de béton FRC (20) agencées parallèles entre elles sont disposées à équidistance les unes des autres, ou dans lequel une partie des entretoises de béton FRC (20) agencées parallèles entre elles ne sont pas disposées de façon équidistante par rapport à une autre partie des entretoises de béton FRC (20) agencées parallèles entre elles, de façon à former au moins une zone avec une densité plus élevée d'entretoises de béton FRC.

5. Élément de plancher en béton (2) selon l'une des revendications 1 à 4, comprenant au moins deux entretoises de béton FRC (20), au moins deux des entretoises de béton FRC (20) étant disposées entre elles suivant un angle inférieur à 180° et supérieur à 0°, en particulier de façon perpendiculaire entre elles, de sorte que les au moins deux entretoises de béton FRC (20) se coupent en un point et qu'elles s'emboîtent au niveau de ce point, les au moins deux entretoises de béton FRC (20) présentant de préférence une rainure opposée (203) au niveau du point de coupe, la profondeur des rainures (203) correspondant au moins à la hauteur des entretoises de béton FRC (20) au niveau du point de coupe.

6. Élément de plancher en béton (2) selon l'une des revendications 3 à 5, dans lequel au moins trois, en particulier au moins quatre, des entretoises de béton FRC (20) sont disposées les unes par rapport aux autres de façon à entourer un espace (30), lequel espace (30) étant au moins en partie coulé avec du béton.

7. Élément de plancher en béton (2) selon l'une des revendications 1 à 6, dans lequel au moins une des entretoises de béton FRC (20) est réalisée pleine et/ou au moins une des entretoises de béton FRC (20) présente au moins une cavité (205), en particulier sous la forme d'une fente, la au moins une cavité étant en particulier pourvue d'un élément de traction, plus particulièrement d'une barre de traction, et étant en particulier remplie au moins partiellement d'un matériau de remplissage (31), de préférence de mortier.

8. Élément de plancher en béton (2) selon l'une des revendications 1 à 7, dans lequel la structure de base (10) comprend au moins deux plaques de béton FRC (100) adjacentes et disposées à plat l'une à côté de l'autre, dans lequel en particulier les plaques de béton FRC (100) sont collées au moins en partie le long de leurs côtés se faisant face.

9. Élément de plancher en béton (2) selon la revendication 8, dans lequel au moins un élément de liaison (32), en particulier une pièce de liaison, est appliqué(e) au moins partiellement sur la surface supérieure (11) le long des côtés orientés l'un vers l'autre des plaques de béton FRC (100) adjacentes et disposées à plat l'une à côté de l'autre.

10. Élément de plancher en béton (2) selon l'une des revendications 1 à 9, dans lequel le au moins un prolongement (204) et l'évidement (110) présentent en coupe transversale la forme d'une cale, en particulier d'une cale avec un ou deux plans inclinés, ou dans lequel le prolongement (204) et l'évidement (110) présentent en coupe transversale la forme d'une cale avec uniquement un plan incliné.

11. Élément de plancher en béton (2) selon l'une des revendications 1 à 10, dans lequel la dimension de l'évidement (110) et la dimension du prolongement (204) sont adaptées l'une à l'autre de sorte que le prolongement (204) puisse être assemblé dans le sens transversal, l'évidement (110) étant réalisé plus grand à son endroit le plus étroit que le prolongement (204) à son endroit le plus large.

12. Plancher en béton (1) comprenant au moins un élément de plancher en béton (2) selon l'une des revendications 1 à 11.

13. Plancher en béton (1) selon la revendication 12, comprenant au moins une conduite (40) qui est disposée sur la surface supérieure (11) de la structure de base (10) et qui est guidée à travers au moins un évidement (202) d'une entretoise de béton FRC (20), et/ou comprenant une couche de recouvrement (50) supportée sur les entretoises de béton FRC (20), en particulier une couche de recouvrement (50) comprenant des dalles de plancher en bois et/ou en pierre et/ou en béton FRC.

14. Utilisation d'un assemblage par emboîtement pour raccorder deux éléments en béton FRC (100, 20), l'assemblage par emboîtement étant composé d'un prolongement d'un élément en béton FRC venant s'engager dans un évidement d'un élément en béton FRC et d'un matériau de remplissage, l'évidement étant dimensionné plus grand que le prolongement, et le prolongement étant ajusté dans l'évidement avec le matériau de remplissage, de sorte que la liaison par correspondance de forme de l'assemblage par emboîtement n'est obtenue que par le matériau de remplissage.

15. Procédé pour fabriquer un plancher en béton (1) comprenant les étapes consistant à :
- fournir au moins un élément de plancher en béton (2) selon l'une des revendications 1 à 11 ; et
- installer au moins une conduite (40) sur la surface supérieure (11) de la structure de base (10) et guider cette conduite (40) à travers au moins un évidement (202) d'une entretoise de béton FRC (20) ; et/ou
- appliquer une couche de recouvrement (50) sur les entretoises de béton FRC (20).

16. Procédé pour fabriquer un plancher en béton (1) selon la revendication 15, consistant à :
- fournir au moins deux éléments de plancher en béton (2) selon l'une des revendications 1 à 11 ; et
- disposer les au moins deux éléments de plancher en béton (2) à plat, l'un à côté de l'autre ; puis en particulier
- coller les au moins deux éléments de plancher en béton (2) au moins en partie le long de leurs côtés orientés l'un vers l'autre ; et/ou en particulier
- installer au moins un élément de liaison (32) sur la surface supérieure (11) au moins en partie le long des côtés orientés l'un vers l'autre des éléments de plancher en béton (2) adjacents et disposés à plat l'un à côté de l'autre.

17. Procédé pour fabriquer un plancher en béton (1) consistant à :
- fournir au moins une plaque de béton FRC (100) pour former une structure de base (10), la plaque de béton FRC (100) présentant au moins un évidement (110) qui présente notamment une section transversale en forme de cale, ou présentant au moins un prolongement (204) sur la surface supérieure (11), lequel prolongement présentant notamment une section transversale en forme de cale ;
- installer en particulier au moins une conduite (40) sur la surface supérieure (11) de la structure de base (10), de préférence de sorte que le au moins un évidement (110) ou le au moins un prolongement (204) reste libre ;
- installer au moins une entretoise de béton FRC (20) avec au moins deux supports sur la surface supérieure (11) de la structure de base (10) en insérant un prolongement (204) des supports (201) de l'entretoise de béton FRC (20) dans le au moins un évidement (110) de la plaque de béton FRC (100) et fixer le prolongement (204) dans l'évidement (110) à l'aide d'un matériau de remplissage (31), le prolongement présentant notamment une section transversale en forme de cale, ou
- installer au moins une entretoise de béton FRC (20) avec au moins deux supports sur la surface supérieure (11) de la structure de base (10) en insérant le prolongement (204) de la surface supérieure (11) de la plaque de béton FRC (100) dans un évidement (110) des supports (201) de l'entretoise de béton FRC (20) et fixer le prolongement (204) dans l'évidement (110) à l'aide d'un matériau de remplissage (31) ;
- appliquer une couche de recouvrement (50) sur l'entretoise de béton FRC (20).

18. Procédé pour fabriquer un plancher en béton (1) selon la revendication 17, consistant à :
- installer au moins une entretoise de béton FRC (20) sur la surface supérieure (11) de la structure de base (10), en particulier suivant un angle inférieur à 180° et supérieur à 0° par rapport à la au moins une entretoise de béton FRC (20) déjà installée, et/ou consistant en particulier à insérer la au moins une entretoise de béton FRC (20) supplémentaire sur au moins une entretoise de béton FRC (20) déjà installée.

19. Procédé pour fabriquer un plancher en béton (1) selon la revendication 17 ou 18, consistant à :
- fournir au moins deux plaques de béton FRC (100) pour former une structure de base (10), en particulier deux plaques de béton FRC (100) présentant en coupe transversale des évidements (110) en forme de cale ;
- installer les au moins deux plaques de béton FRC (100) à plat l'une à côté de l'autre ;
- coller les au moins deux plaques de béton FRC (100) au moins en partie le long de leurs côtés orientés l'un vers l'autre ; et/ou
- installer en particulier au moins un élément de liaison (32) sur la surface supérieure (11) au moins en partie le long des côtés orientés l'un vers l'autre des plaques de béton FRC (100) adjacentes et installées à plat l'une à côté de l'autre.

20. Procédé pour fabriquer un élément de plancher en béton (2) selon l'une des revendications 1 à 11, consistant à :
- fournir au moins une plaque de béton FRC (100) pour former une structure de base (10), en particulier une plaque de béton FRC (100) avec des évidements (110) en forme de cale en coupe transversale ;
- installer au moins une entretoise de béton FRC (20) sur la surface supérieure (11) de la structure de base (10) en insérant un prolongement (204) des supports (201) de l'entretoise de béton FRC (20) dans un évidement (110), et en particulier fixer le prolongement (204) dans l'évidement (110) à l'aide d'un matériau de remplissage, ou en insérant un prolongement (204) de la plaque de béton FRC (100) dans un évidement (110) des supports (201) de l'entretoise de béton FRC (20) et fixer le prolongement (204) dans l'évidement (110) à l'aide d'un matériau de remplissage ;
- en particulier installer au moins une autre entretoise de béton FRC (20) sur la surface supérieure (11) de la structure de base (10), de préférence suivant un angle inférieur à 180° et supérieur à 0° par rapport à la au moins une entretoise de béton FRC (20) déjà installée et/ou de préférence insérer la au moins une entretoise de béton FRC (20) supplémentaire sur la au moins une entretoise de béton FRC (20) déjà installée.
